# EUROPÄISCHE PATENTANMELDUNG

(11) **EP 4 435 019 A1**
(43) Veröffentlichungstag der Anmeldung: **25.09.2024**
(21) Anmeldenummer: 23163407.2
(22) Anmeldetag: 22.03.2023
(51) Int. Cl.: C08F 220/14, C08J 11/12

(54) **RECYCLE-MMA UND DESSEN VERWENDUNG IN EINEM KONTINUIERLICHEN POLYMERISATIONSPROZESS**

(71) Anmelder: Röhm GmbH, 64295 Darmstadt (DE)
(72) Erfinder: KRILL, Steffen, 64367 Mühltal (DE); VORHOLZ, Johannes, 63755 Alzenau (DE); SCHUHMANN, Timm, 64625 Bensheim (DE); WINGS, Patrick, 50935 Köln (DE)
(74) Vertreter: Röhm Patent Association

(57) **Zusammenfassung**

Die vorliegende Erfindung betrifft ein neues Verfahren zur Herstellung eines Poly(alkyl(meth)acrylats). In diesem Verfahren wird zunächst eine Polymerzusammensetzung, die mindestens ein Poly(alkyl(meth)acrylat) enthält, thermisch gespalten unter Erhalt mindestens eines Alkyl(meth)acrylats und mindestens eines weiteren Alkylesters. Diese Mischung wird anschließend kondensiert und mit einem Strom eines Poly(alkyl(meth)acrylat)-Herstellverfahrens gemischt. Durch Polymerisation wird dann das Poly(alkyl(meth)acrylat) erhalten.

## Beschreibung

### Gebiet der Erfindung

Die vorliegende Erfindung betrifft ein neues Verfahren zur Herstellung eines Poly(alkyl(meth)acrylats). In diesem Verfahren wird zunächst eine Polymerzusammensetzung, die mindestens ein Poly(alkyl(meth)acrylat) enthält, thermisch gespalten unter Erhalt mindestens eines Alkyl(meth)acrylats und mindestens eines weiteren Alkylesters. Diese Mischung wird anschließend kondensiert und mit einem Strom eines Poly(alkyl(meth)acrylat)-Herstellverfahrens gemischt. Durch Polymerisation wird dann das Poly(alkyl(meth)acrylat) erhalten.

### Stand der Technik

Alkyl(meth)acrylate, insbesondere Methylmethacrylat (MMA), besitzen einen breiten Einsatzbereich.

MMA wird insbesondere zur Herstellung von Polymethylmethacrylat (PMMA) eingesetzt, welches sich durch hervorragende optische Eigenschaften, insbesondere eine hohe Transparenz und Witterungsbeständigkeit (Acrylglas), und andere physikalische Eigenschaften auszeichnet. Seine Einsatzgebiete umfassen Verglasungen und Fassaden in der Architektur, Beleuchtungselemente und Fahrzeugrückleuchten im Automobilbereich, Flugzeugfenster, Dekorations-, Design- oder Möbelelemente, Flachbildschirme und Displays, Lärmschutzwände und Lichtwerbungen.

Bei der Verarbeitung von PMMA fallen Produktionsabfälle, sogenannte Post Industrial-Abfälle, an. Post Industrial-Abfälle umfassen insbesondere Verschnitte und allgemeine Abfälle, die beim Herstellprozess sowie bei der nachfolgenden Bearbeitung beim und nach dem Extrudieren oder dem Gießen von PMMA-Formmassen entstehen.

Aus PMMA-Formmassen hergestellte Produkte, wie beispielsweise Treibhausverglasungen, Lärmschutzbarrieren, Flugzeugverglasungen, Spuckschutzscheiben oder Bildschirme, sowie eingefärbte Formmassen wie sie unter anderem im Automobilbereich eingesetzt werden (z.B. Lichtleiter, Rücklichter und Karosserieteile), werden nach der Nutzung beim Kunden üblicherweise entsorgt und zusammen mit anderen Plastikmüllsorten deponiert oder in einem Kraftwerk thermisch entsorgt und verbrannt. Derartige Altstoffe werden üblicherweise als Post Consumer-Abfälle bezeichnet. Darüber hinaus enthalten Post Consumer-Abfälle wie Elektro- und Altgeräteschrott PMMA häufig auch als Verunreinigungen des Sortierprozesses neben anderen Kunststoffen und Additive. Der Anteil an MMA-Baueinheiten in den in den Abfällen enthaltenen PMMA-Polymeren ist unterschiedlich und kann von 75 % bis über 99 % liegen.

PMMA, sowohl als Post Industrial-Abfall, als auch als Post Consumer-Abfall, kann grundsätzlich in seine Monomere depolymerisiert und als sogenanntes Recycle-MMA wiederverwendet werden. Zur Depolymerisation sind im Stand der Technik verschiedene Verfahren, wie Depolymerisation in Metallbädern, Drehrohröfen, Wirbelschichtreaktoren oder Extrudern, beschrieben.

Beispielsweise beschreiben die Druckschriften DE 642289 C, US 2,030,901, DE 3146194 A1, EP 3 635 043 und US 2,470,361 die thermische Depolymerisation von PMMA, teilweise mit nachfolgender Aufreinigung der erhaltenen Monomere, beispielsweise mittels Destillation.

Thermisch-katalytische Depolymerisationen von PMMA mit anschließender Aufreinigung der erhaltenen Monomere sind beispielsweise in US 2,858,255, DE 2132716, WO 2019/003253, DE 19729065 und EP 2 895 576 beschrieben.

Ebenso bekannt ist die Depolymerisation von PMMA, teilweise zusammen mit anderen Polymeren, in einer Wirbelschicht. Dies ist beispielsweise in US 5,663,420, WO 2000/017149 und US 8,304,573 beschrieben.

US 3,494,958 beschreibt ein thermisches Depolymerisationsverfahren für PMMA. Das erhaltene Monomer kann anschließend mittels Destillation aufgereinigt werden. Die US 3,494,958 beschreibt, dass die Aufreinigung beispielsweise analog zur Aufreinigung in einem ACH-Prozess (C₃-Verfahren) erfolgen kann.

In den vorstehend beschriebenen Verfahren ist die Ausbeute an Monomeren häufig nicht ausreichend. Zudem erzielen die im Stand der Technik beschriebenen Verfahren recycelte Alkyl(meth)acrylate, deren Reinheit nicht ausreichend ist zur Herstellung von Poly(alkyl(meth)acrylaten) ausreichender Qualität. Dies ist insbesondere der Fall, wenn in den Depolymerisationsprozessen Poly(methylmethacrylat) eingesetzt wird, das einen großen Anteil an Additiven, wie Schlagzähmodifizierern oder Pigmenten und/oder andere Polymeren enthält.

Dadurch weicht recyceltes Alkyl(meth)acrylat, insbesondere recyceltes MMA (Recycle MMA) in seiner Qualität deutlich von der von reinem Alkyl(meth)acrylat, insbesondere von reinem MMA, das direkt aus MMA-Herstellverfahren gewonnen wird, ab. Der Gehalt an MMA in Recycle MMA erreicht üblicherweise nicht die handelsübliche Spezifikation von einer Reinheit von 99,8 Gew.-% für reines MMA. Oftmals sind mehrere 100 ppm bis mehrere 1000 ppm störender Stoffe enthalten, die einen negativen Einfluss auf die Herstellung hochreiner PMMA Granulate aus Recycle MMA ausüben.

Je nachdem welche Post Industrial-Abfälle und/oder Post Consumer-Abfälle für die Recycle MMA-Herstellung verwendet werden, weist das Recycle MMA auch eine nicht tolerierbare Färbung und/der einen Geruch auf. Letzterer kann beispielsweise von schwefelhaltigen Reglern und anderen Additiven stammen, die bei der thermischen Depolymerisation freigesetzt werden und sich in geruchsintensive Mercaptane umwandeln können.

Daher kann derzeit Recycle MMA aus einem Depolymerisationsprozess direkt als Rohstoff in einer kontinuierlichen PMMA Polymerisation eingesetzt werden.

Aufgrund ihrer geringen Reinheit haben die recycelten Alkyl(meth)acrylate nur einen beschränkten Anwendungsbereich. Insbesondere können sie nur beschränkt zur Herstellung von Poly(alkyl(meth)acrylaten) verwendet werden.

### Aufgabe

Es bestand daher Bedarf, ein verbessertes Verfahren zur Herstellung eines Poly(alkyl(meth)acrylats) bereitzustellen, das die Nachteile der im Stand der Technik beschriebenen Verfahren nicht oder nur in vermindertem Maße aufweist.

Es war zudem Aufgabe der vorliegenden Erfindung recycelte Alkyl(meth)acrylate, deren Reinheit unterhalb derer von Alkyl(meth)acrylaten aus Alkyl(meth)acrylat-Herstellverfahren mindestens anteilig für die Herstellung von spezifikationsgerechten Poly(alkyl(meth)acrylaten) einzusetzen. Enthaltene störende Stoffe sollten im Poly(alkyl(meth)acrylat)-Herstellverfahren effektiv abtrennbar sein.

Insbesondere soll das Verfahren einen geringeren Ausstoß an klimawirksamen Abfallstoffen wie COz aufweisen.

### Lösung

Gelöst wurde diese Aufgabe durch ein Verfahren zur Herstellung eines Poly(alkyl(meth)acrylats) umfassend die folgenden Schritte a) bis h)
a) thermische Spaltung von mindestens einer Polymerzusammensetzung, die mindestens ein Poly(alkyl(meth)acrylat) enthält, unter Erhalt eines ersten Gasstroms, der mindestens ein Alkyl(meth)acrylat und mindestens einen weiteren Alkylester enthält,
b) Kondensation des in Schritt a) erhaltenen ersten Gasstroms unter Erhalt eines flüssigen ersten Stroms, der das mindestens eine Alkyl(meth)acrylat und den mindestens einen weiteren Alkylester enthält,
c) Mischen des in Schritt b) erhaltenen flüssigen ersten Stroms mit einem weiteren Strom, der mindestens ein weiteres Alkyl(meth)acrylat enthält, wobei der weitere Strom Teil eines Poly(alkyl(meth)acrylat)-Herstellverfahrens ist, unter Erhalt eines Mischstroms, der den flüssigen ersten Strom und den weiteren Strom umfasst,
e) teilweise Polymerisation des in Schritt c) erhaltenen Mischstroms unter Erhalt eines Sirups, der teilweise polymerisiertes mindestens ein Alkyl(meth)acrylat, teilweise polymerisiertes mindestens ein weiteres Alkyl(meth)acrylat und den mindestens einen weiteren Alkylester enthält,
f) Polymerisation des in Schritt e) erhaltenen Sirups in einem Entgasungsextruder unter Erhalt einer Polymermischung, die das Poly(alkyl(meth)acrylat) enthält,
g) Entgasung des in Schritt e) erhaltenen Sirups und/oder der in Schritt f) erhaltenen Polymermischung in dem Entgasungsextruder unter Erhalt eines Kondensatstroms, der das mindestens eine Alkyl(meth)acrylat, das mindestens eine weitere Alkyl(meth)acrylat, deren Oligomere und den mindestens einen weiteren Alkylester enthält,
h) Abtrennung des mindestens einen weiteren Alkylesters aus dem in Schritt g) erhaltenen Kondensatstrom unter Erhalt eines Alkyl(meth)acrylatstroms, der das mindestens eine Alkyl(meth)acrylat und das mindestens eine weitere Alkyl(meth)acrylat enthält.

Es wurde überraschend gefunden, dass durch das erfindungsgemäße Verfahren Poly(alkyl(meth)acrylate) mit einer Reinheit von > 99 % erhalten werden.

Die mit dem erfindungsgemäßen Verfahren hergestellten Poly(alkyl(meth)acrylate), insbesondere Polymethyl(meth)acrylat, haben insbesondere ausreichende Reinheiten für die Herstellung von gefärbten Poly(alkyl(meth)acrylaten), insbesondere gefärbten Polymethyl(meth)acrylaten. Teilweise weisen die mit dem erfindungsgemäßen Verfahren hergestellten Poly(alkyl(meth)acrylate), insbesondere Polymethyl(meth)acrylat, sogar so hohe Reinheiten auf, dass sie zur Herstellung von glasklaren Poly(alkyl(meth)acrylaten), insbesondere glasklarem Polymethyl(meth)acrylat, geeignet sind. Die mit dem erfindungsgemäßen Verfahren hergestellen Poly(alkyl(meth)acrylate) haben zudem eine hohe Transmission bei 450 nm und einen niedrigen Gelbwert bei einer gleichzeitig ausreichend hohen Vicat-Erweichungstemperatur.

Insbesondere können durch das erfindungsgemäße Verfahren überraschenderweise Nebenprodukte wie weitere Alkylester besonders effizient entfernt werden, sodass diese die hergestellten Poly(alkyl(meth)acrylate) nicht verunreinigen, selbst wenn sich deren Normalsiedetemperatur nur geringfügig, beispielsweise um +/- 1 K (Kelvin), vorzugsweise +/- 0,6 K, von der Normalsiedetemperatur des Alkyl(meth)acrylats unterscheidet. Dies ist insbesondere durch Verfahrensschritte g) und h) bedingt.

Auch Additive und Kettenregler, die in der Polymerzusammensetzung enthalten sein können, und die aus ihnen bei der thermischen Spaltung der Polymerzusammensetzung erhaltenen Produkte wie Mercaptane lassen sich einfach und kostengünstig durch das erfindungsgemäße Verfahren abtrennen. Beispielsweise enthält das im erfindungsgemäßen Verfahren erhaltene Poly(alkyl(meth)acrylat) maximal 0,5 % Nebenprodukte. Aufgrund des erfindungsgemäßen Verfahrens und der dadurch möglichen effizienten Abtrennung der Nebenprodukte, weisen die erfindungsgemäß hergestellten Poly(alkyl(meth)acrylate) trotz der in der Polymerzusammensetzung enthaltenen Mercaptane keinen oder nur einen sehr geringen Geruch auf.

Das erfindungsgemäße Verfahren und mit dem erfindungsgemäßen Verfahren hergestellte Poly(alkyl(meth)acrylate) weisen zudem einen geringeren COz-Ausstoß und damit einen besonders niedrigen Carbon Footprint auf. Dies wird insbesondere dadurch erzielt, dass das erfindungsgemäße Verfahren auch die Verwendung von Polymerzusammensetzungen mit einem relativ hohen Anteil an Additiven und sonstigen Verunreinigungen erlaubt und dass die Rohstoffquelle wiederverwendbar ist.

Das erfindungsgemäße Verfahren ist somit den bisher bekannten überlegen, da es der Anforderung gerecht wird, sich selbst in der Kreislaufkette wiederverwenden zu können (circular economy).

Zudem können die bei der Depolymerisation erhaltenen Nebenprodukte nach ihrer Abtrennung weiterverwertet werden, sodass der Carbon Footprint und damit das global warming potential (GWP) weiter reduziert wird.

Nachfolgend wird das erfindungsgemäße Verfahren näher beschrieben.

In Schritt a) des erfindungsgemäßen Verfahrens wird mindestens eine Polymerzusammensetzung thermisch gespalten unter Erhalt eines ersten Gasstroms. Die mindestens eine Polymerzusammensetzung enthält mindestens ein Poly(alkyl(meth)acrylat). Der Gasstrom enthält mindestens ein Alkyl(meth)acrylat und mindestens einen weiteren Alkylester.

Der Begriff "mindestens eine Polymerzusammensetzung" bedeutet im Rahmen der vorliegenden Erfindung sowohl genau eine Polymerzusammensetzung als auch eine Mischung aus zwei oder mehreren Polymerzusammensetzungen. Eine Mischung aus zwei oder mehreren Polymerzusammensetzungen ist erfindungsgemäß bevorzugt.

Die mindestens eine Polymerzusammensetzung enthält mindestens ein Poly(alkyl(meth)acrylat).

"Mindestens ein Poly(alkyl(meth)acrylat)" bedeutet im Rahmen der vorliegenden Erfindung sowohl genau ein Poly(alkyl(meth)acrylat) als auch eine Mischung aus zwei oder mehreren Poly(alkyl(meth)acrylaten). Unter "Poly(alkyl(meth)acrylaten)" werden im Rahmen der vorliegenden Erfindung Polymere und Copolymere von Alkyl(meth)acrylaten verstanden.

Copolymere von Alkyl(meth)acrylaten sind beispielsweise Copolymere von Alkyl(meth)acrylaten mit 1-Alkenen, anderen Alkyl(meth)acrylaten, (Meth)acrylsäure, Styrol, Polyestern, Vinylestern und/oder Polyurethan(meth)acrylaten.

1-Alkene, die mit Alkyl(meth)acrylaten copolymerisieren können, sind als solche bekannt und beispielsweise 1-Hexen, 1-Hepten, Vinylcyclohexan, 3,3-Dimethyl-1-propen, 3-Methyl-1-diisobutylen und 4-Methylpenten-1.

Unter dem Begriff "Styrol" wird im Rahmen der vorliegenden Erfindung nicht nur Styrol als solches verstanden, sondern auch substituierte Styrole wie beispielsweise α-Methylstyrol, α-Ethylstyrol, Vinyltoluol, p-Methylstyrol, Monochlorstyrole, Dichlorstyrole und Tribromstyrole.

Geeignete Polyester sind als solche bekannt und vorzugsweise via Polykondensation oder ringöffnende Polymerisation erhältlich.

Unter "Polyurethan(meth)acrylaten" werden im Rahmen der vorliegenden Erfindung (Meth)acrylate verstanden, die über Urethangruppen miteinander verknüpft sind. Sie sind durch Umsetzung von Hydroxyalkyl(meth)acrylaten mit Polyisocyanaten und Polyoxyalkylenen, die mindestens zwei Hydroxyfunktionalitäten aufweisen, erhältlich. Anstelle von Hydroxyalkyl(meth)acrylaten können auch Ester der (Meth)acrylsäure mit Oxiranen, wie beispielsweise Ethylenoxid oder Propylenoxid, oder entsprechende Oligooxirane bzw. Polyoxirane verwendet werden. Geeignete Polyurethan(meth)acrylate sind als solche bekannt.

Die mindestens eine Polymerzusammensetzung kann beispielsweise aus Produktionsabfällen stammen. Dann handelt es sich bei der Polymerzusammensetzung üblicherweise um sogenannte Post Industrial-Abfälle, wie beispielsweise Angüsse, Anfahrklumpen bei der Extrusion, Stäube, Späne, anpolymerisierte Polymersirupe, Randabschnitte, Verschnitte bei Platten, Ausschuss bei Platten, Folien, Blöcke, Halbzeuge, Fehlfabrikationen von Formteilen oder Abfälle beim Spritzgießen.

Ebenso ist es möglich, dass die mindestens eine Polymerzusammensetzung aus sogenannten Post Consumer-Abfällen stammt. Dann handelt es sich üblicherweise um Abfälle von beispielsweise Elektro- und Altgeräteschrott, Gewächshäusern, Messebauten, Shop-Fittinge oder Lichtwerbung.

Die mindestens eine Polymerzusammensetzung enthält daher üblicherweise zumindest eine weitere Komponente. Die zumindest eine weitere Komponente ist beispielsweise ausgewählt aus der Gruppe bestehend aus von dem Poly(alkyl(meth)acrylat) verschiedenen Polymeren, Pigmenten, Farbstoffen, Füllstoffen, Hilfsstoffen, Reglern, Initiatoren, Schlagzähmachern, Trennmitteln und UV-Additiven.

Bevorzugt ist daher auch ein Verfahren, bei dem dass die Polymerzusammensetzung in Schritt a) zumindest eine weitere Komponente ausgewählt aus der Gruppe bestehend aus von Poly(alkyl(meth)acrylat) verschiedenen Polymeren, Pigmenten, Farbstoffen, Füllstoffen, Hilfsstoffen, Reglern, Initiatoren, Schlagzähmachern, Trennmitteln und UV-Additiven, enthält.

Als von Poly(alkyl(meth)acrylat) verschiedene Polymere kommen insbesondere solche Polymere in Betracht, die üblicherweise als Blend mit Poly(alkyl(meth)acrylat) eingesetzt werden können. Hierzu zählen beispielsweise Polyethylen, Polyvinylchlorid, Polystyrol, Polyamide und Biopolymere wie α-Polysaccharide (Stärke), β-Polysaccharide (Cellulose, Chitin) Lignin und Polylactid.

Pigmente sind beispielsweise weiße, rote, blaue, grüne und/oder gelbe anorganische Pigmente. Besonders bevorzugt sind weiße, anorganische Pigmente wie Titandioxid.

Farbstoffe sind beispielsweise dem Fachmann bekannte organische Farbstoffe.

Typische Füllstoffe sind insbesondere mineralische Füllstoffe. Mineralische Füllstoffe sind vorzugsweise ausgewählt aus der Gruppe bestehend aus Calciumcarbonat, Bariumsulfat, Quarz, Quarzmehl, gefällten Kieselsäuren, pyrogenen Kieselsäuren, Korunde, Glasperlen und Cristobaliten.

Typische Hilfsstoffe sind als solche bekannt und beispielsweise ausgewählt aus der Gruppe bestehend aus Weichmachern, Paraffinen und/oder Inhibitoren.

Als Weichmacher werden vorzugsweise Ester, Polyole, Öle, niedermolekulare Polyether oder Phthalate eingesetzt.

Paraffine, die in der Polymerzusammensetzung enthalten sein können, sind als solche bekannt. Es können beispielsweise mehrere Paraffine mit unterschiedlichen Schmelzpunkten in unterschiedlichen Konzentrationen enthalten sein.

Aus der Gruppe der Inhibitoren sind vorzugsweise substituierte Phenole, Hydrochinonderivate, Phosphine und/oder Phosphite enthalten.

Als Regler kommen insbesondere aus der radikalischen Polymerisation bekannte Verbindungen, die die Kettenlängen regeln, in Betracht. Üblicherweise umfassen Kettenregler Mercaptane wie n-Dodecylmercaptan, aber auch mehrwertige Mercaptoverbindungen wie Pentaerythroltetrathioglycolat.

Initiatoren sind als solche ebenfalls bekannt und beispielsweise ausgewählt aus der Gruppe bestehend aus Peroxiden, Azoverbindungen, Persulfaten und Mischungen daraus.

Schlagzähmacher sind als solche bekannt und beispielsweise Polymerpartikel, die ein Elastomer enthalten.

Als Trennmittel kommen insbesondere langkettige Wachssäuren, wie Stearinsäure, Palmitinsäure oder Laurinsäure, sowie einwertige Fett- oder Wachsalkohole, wie beispielsweise Diethylenglycolmonopropylether, in Betracht.

Als UV-Additive kommen insbesondere UV-Stabilisatoren in Frage. Vorzugsweise werden die UV-Stabilisatoren ausgewählt aus der Gruppe bestehend aus Benzophenonderivaten, Benzotriazolderivaten, Thioxanthonatderivaten, Piperidinolcarbonsäureesterderivaten und Zimtsäureesterderivaten.

Die thermische Spaltung der mindestens einen Polymerzusammensetzung kann nach dem Fachmann bekannten Methoden erfolgen.

Die thermische Spaltung kann in dem Fachmann bekannten Reaktoren für thermische Spaltungen durchgeführt werden. Beispielsweise kann die thermische Spaltung in einem Pyrolysereaktor, in einem Extruder, in einem Drehrohrofen, einer Wirbelschichtpyrolyse, in einem Metallbad und/oder als trockene Destillation durchgeführt werden.

Die Polymerzusammensetzung kann bei der thermischen Spaltung in fester oder flüssiger Form vorliegen. Liegt die Polymerzusammensetzung in fester Form vor, so kann sie als reiner Feststoff vorliegen. Ebenso ist es möglich, dass die Polymerzusammensetzung in fester Form in einem Medium dispergiert vorliegt. Das Medium, in dem die Polymerzusammensetzung dispergiert vorliegen kann, kann beispielsweise ein Feststoff, wie Quarz, Metallspäne oder Kieselgur, sein. Ebenso ist es möglich, dass das Medium ein Gas ist wie beispielsweise Stickstoff oder eine Flüssigkeit, wie beispielsweise Wasser oder ein Kohlenwasserstoff. Es ist möglich, dass das Medium bei Raumtemperatur eine Flüssigkeit ist, bei den Bedingungen der thermischen Spaltung in Schritt a) allerdings als Gas vorliegt.

Die Polymerzusammensetzung liegt beispielsweise in flüssiger (geschmolzener) Form vor, wenn die thermische Spaltung in einem Extruder erfolgt.

Die Polymerzusammensetzung kann, insbesondere wenn sie in fester Form vorliegt, vor der thermischen Spaltung mechanisch zerkleinert werden, beispielsweise auf eine durchschnittliche Teilchengrößenverteilung von unter 6 mm (Qr, d50) bevorzugt unter 1,5 mm (Qr, d50), beispielsweise auf eine Teilchengrößenverteilung im Bereich von 0,1 mm (Qr, d50) bis 6 mm (Qr, d50). Vorzugsweise wird die Teilchengrößenverteilung mittels Laserdiffraktometrie bestimmt.

Die Temperatur (T) bei der thermischen Spaltung in Schritt a) liegt beispielsweise in einem Bereich von 240 °C bis 800 °C, bevorzugt im Bereich von 300 °C bis 500 °C, besonders bevorzugt im Bereich von 325 °C bis 400 °C.

Der Druck bei der thermischen Spaltung in Schritt a) liegt beispielsweise im Bereich von 200 mbar bis 1000 bar, bevorzugt im Bereich von 400 mbar bis 500 bar.

Erfindungsgemäß bevorzugt ist daher auch ein Verfahren, bei dem die Temperatur bei der thermischen Spaltung in Schritt a) im Bereich von 240 °C bis 800 °C liegt und/oder der Druck bei der thermischen Spaltung in Schritt a) im Bereich von 400 mbar bis 500 bar liegt.

Die thermische Spaltung in Schritt a) kann in Gegenwart eines Katalysators erfolgen. Für die thermische Spaltung geeignete Katalysatoren sind als solche bekannt und beispielsweise ausgewählt aus der Gruppe bestehend aus geschmolzenem Metall, Peroxiden, Kaliumsalzen wie beispielsweise Kaliumacetat, und Alkalimetallpersulfate wie beispielsweise Kaliummonopersulfat. Als geschmolzenes Metall eignen sich insbesondere Blei und/oder eutektischer Blei/Zinn Mischungen.

Erfolgt die thermische Spaltung in Schritt a) in Gegenwart eines Katalysators, so wird die Spaltung in Schritt a) auch als thermisch katalytische Spaltung bezeichnet.

Erfindungsgemäß bevorzugt ist daher auch ein Verfahren, bei dem die thermische Spaltung in Schritt a) eine thermisch katalytische Spaltung ist.

Bei der thermischen Spaltung in Schritt a) wird das Poly(alkyl(meth)acrylat) gespalten. Diese Spaltung wird auch als Depolymerisation bezeichnet. Depolymerisationen als solche sind dem Fachmann bekannt. Bei Depolymerisationen wird ein Polymer in seine Monomer- und Oligomereinheiten gespalten.

Bei der thermischen Spaltung in Schritt a) wird also das Poly(alkyl(meth)acrylat) in seine Monomer- und Oligomereinheiten gespalten. Wie vorstehend ausgeführt, ist das Poly(alkyl(meth)acrylat) ein Polymer oder Copolymer von mindestens einem Alkyl(meth)acrylat. Bei der thermischen Spaltung bildet sich daher mindestens ein Alkyl(meth)acrylat.

Bei der thermischen Spaltung der Polymerzusammensetzung bildet sich zudem mindestens ein weiterer Alkylester. "Mindestens ein weiterer Alkylester" bedeutet im Rahmen der vorliegenden Erfindung sowohl genau ein weiterer Alkylester als auch eine Mischung aus zwei oder mehreren weiteren Alkylestern. Eine Mischung aus zwei oder mehreren weiteren Alkylestern ist erfindungsgemäß bevorzugt.

Der erste Gasstrom enthält daher das bei der thermischen Spaltung gebildete mindestens eine Alkyl(meth)acrylat und den mindestens einen weiteren Alkylester.

Das mindestens eine Alkyl(meth)acrylat ist, wie vorstehend ausgeführt, von dem Poly(alkyl(meth)acrylat) abgeleitet.

"Mindestens ein Alkyl(meth)acrylat" bedeutet im Rahmen der vorliegenden Erfindung sowohl genau ein Alkyl(meth)acrylat als auch eine Mischung aus zwei oder mehreren Alkyl(meth)acrylaten. Eine Mischung aus zwei oder mehreren Alkyl(meth)acrylaten ist bevorzugt.

Unter "Alkyl(meth)acrylaten" werden im Rahmen der vorliegenden Erfindung Alkylester von (Meth)acrylsäure verstanden, die 1 bis 18, bevorzugt 1 bis 12, insbesondere bevorzugt 1 bis 4, Kohlenstoffatome im Alkylrest aufweisen. Der Alkylrest kann linear, zyklisch und/oder verzweigt sein. Darüber hinaus kann er aromatische Reste aufweisen. Der Alkylrest kann zudem Heteroatome innerhalb des Alkylrests aufweisen und/oder mit Heteroatomen substituiert sein, wie dies beispielsweise bei Hydroxypropyl(meth)acrylat und/oder Hydroxyethyl(meth)acrylat der Fall ist. Beispielsweise sind erfindungsgemäße Alkyl(meth)acrylate ausgewählt aus der Gruppe bestehend aus Methyl(meth)acrylat, Ethyl(meth)acrylat, 1-Methyl-Ethyl(meth)acrylat, Propyl(meth)acrylat, n-Butyl(meth)acrylat, Isobutyl(meth)acrylat, 2-Ethylhexyl(meth)acrylat, Isopentyl(meth)acrylat, Cyclohexyl(meth)acrylat, Tetrahydrofurfuryl(meth)acrylat, Allyl(meth)acrylat, Polyethylenglycol(meth)acrylat, Stearyl(meth)acrylat, Benzyl(meth)acrylat, Vinyl(meth)acrylat, Hydroxypropyl(meth)acrylat, Hydroxyethyl(meth)acrylat und Lauryl(meth)acrylat.

In einer weiteren Ausführungsform der vorliegenden Erfindung werden unter "Alkyl(meth)acrylaten" auch Polyethylenglycol(meth)acrylate mit einem gewichtsmittleren Molekulargewicht Mw im Bereich von 250 g/mol bis 10.000 g/mol verstanden.

Der Begriff "(Meth)acrylsäure" umfasst im Rahmen der vorliegenden Erfindung sowohl Acrylsäure als auch Methacrylsäure. Der Begriff "(Meth)acrylate" umfasst im Rahmen der vorliegenden Erfindung sowohl Acrylate als auch Methacrylate.

Unter "Alkyl(meth)acrylaten" werden im Rahmen der vorliegenden Erfindung daher sowohl Alkylmethacrylate als auch Alkylacrylate verstanden. Alkylmethacrylate sind erfindungsgemäß bevorzugt. Das mindestens eine Alkyl(meth)acrylat ist beispielsweise ein C₁-C₁₈-Alkyl(meth)acrylat, bevorzugt ein C₁-C₁₂-Alkyl(meth)acrylat und besonders bevorzugt ein C₁-C₄-Alkyl(meth)acrylat. Erfindungsgemäß am meisten bevorzugt umfasst das mindestens eine Alkyl(meth)acrylat Methyl(meth)acrylat.

Bevorzugt ist daher auch ein Verfahren, bei dem das in dem ersten Gasstrom in Schritt a) enthaltene mindestens eine Alkyl(meth)acrylat ausgewählt ist aus der Gruppe bestehend aus C₁- bis C₄-Alkyl(meth)acrylaten.

Das mindestens eine Alkyl(meth)acrylat weist beispielsweise eine Siedetemperatur bei Normaldruck im Bereich von 50 °C bis 300 °C, bevorzugt im Bereich von 80 °C bis 250 °C, auf.

Es versteht sich von selbst, dass der mindestens eine weitere Alkylester von dem mindestens einen Alkyl(meth)acrylat verschieden ist. Der mindestens eine weitere Alkylester umfasst vorzugsweise keine (Meth)acrylat-Einheit.

Beispielsweise ist der mindestens eine weitere Alkylester ausgewählt aus der Gruppe bestehend aus C₁-C₄-Alkylisobutyraten, C₁-C₄-Alkylpropionaten, C₁-C₄-Alkylpivalaten und Dicarbonsäurediestern.

Unter C₁-C₄-Alkylisobutyraten werden im Rahmen der vorliegenden Erfindung Alkylester der Isobuttersäure verstanden, die 1 bis 4 Kohlenstoffatome im Alkylrest aufweisen. Der Alkylrest kann linear oder verzweigt sein. Er kann zudem Heteroatome innerhalb des Alkylrests aufweisen und/oder mit Heteroatomen substituiert sein. Ein C₁-C₄-Alkylisobutyrat, das Heteroatome innerhalb des Alkylrests aufweist, ist beispielsweise Methyl-2-methoxyisobutyrat und Methyl-3-methoxyisobutyrat. Erfindungsgemäße C₁-C₄-Alkylisobutyrate sind beispielsweise ausgewählt aus der Gruppe bestehend aus Methylisobutyrat, Ethylisobutyrat, Methyl-2-methoxyisobutyrat und Methyl-3-methoxyisobutyrat.

Unter C₁-C₄-Alkylpropionaten werden im Rahmen der vorliegenden Erfindung Alkylester der Propionsäure verstanden, die 1 bis 4 Kohlenstoffatome im Alkylrest aufweisen. Der Alkylrest kann linear oder verzweigt sein. Er kann zudem Heteroatome innerhalb des Alkylrests aufweisen und/oder mit Heteroatomen substituiert sein. Erfindungsgemäße C₁-C₄-Alkylpropionate sind beispielsweise ausgewählt aus der Gruppe bestehend aus Methylpropionat und Ethylpropionat.

Unter C₁-C₄-Alkylpivalaten werden im Rahmen der vorliegenden Erfindung Alkylester der Pivalinsäure verstanden, die 1 bis 4 Kohlenstoffatome im Alkylrest aufweisen. Der Alkylrest kann linear oder verzweigt sein. Er kann zudem Heteroatome innerhalb des Alkylrests aufweisen und/oder mit Heteroatomen substituiert sein. Erfindungsgemäße C₁-C₄-Alkylpivalate sind beispielsweise ausgewählt aus der Gruppe bestehend aus Methylpivalat und Ethylpivalat.

Unter Dicarbonsäurediestern werden im Rahmen der vorliegenden Erfindung Alkylester von Dicarbonsäuren verstanden, die 1 bis 4 Kohlenstoffe im Alkylrest aufweisen. Ebenso werden unter Dicarbonsäurediestern Carbonsäureester von Diolen verstanden, bei denen beide Hydroxygruppen mit einer Carbonsäure verestert sind. Erfindungsgemäße Dicarbonsäurediester sind beispielsweise ausgewählt aus der Gruppe bestehend aus Propandisäure-dimethylester, Pentandisäuredimethylester, Hexandisäure-dimethylester und Heptandisäure-dimethylester.

Vorzugsweise ist der mindestens eine weitere Alkylester ausgewählt aus der Gruppe bestehend aus Methylpropionat, Ethylpropionat, Methylisobutyrat, Methylpivalat, Methyl-3-methoxyisobutyrat und Dicarbonsäurediestern.

Bevorzugt ist daher auch ein Verfahren, bei dem der mindestens eine weitere Alkylester ausgewählt ist aus der Gruppe bestehend aus Methylpropionat, Methylisobutyrat, Methylpivalat, Methyl-3-methoxyisobutyrat und Dicarbonsäurediestern.

Der mindestens eine weitere Alkylester weist beispielsweise eine Siedetemperatur bei Normaldruck im Bereich von 50 °C bis 200 °C, bevorzugt im Bereich von 75 °C bis 150 °C, auf.

Erfindungsgemäß weiterhin bevorzugt unterscheidet sich der Siedepunkt bei Normaldruck von zumindest einem mindestens einem weiteren Alkylester von dem Siedepunkt bei Normaldruck von zumindest einem mindestens einem Alkyl(meth)acrylat um im Bereich von -20 °C bis +20 °C, bevorzugt um im Bereich von -1 °C bis +1 °C, besonders bevorzugt um im Bereich von -0,6 °C bis +0,6 °C.

Wie vorstehend ausgeführt, wird der erste Gasstrom durch thermische Spaltung der mindestens einen Polymerzusammensetzung erhalten. Üblicherweise enthält der erste Gasstrom daher mindestens eine weitere Komponente. Es versteht sich von selbst, dass die mindestens eine weitere Komponente von dem mindestens einen Alkyl(meth)acrylat und dem mindestens einen weiteren Alkylester verschieden ist.

Die mindestens eine weitere Komponente bildet sich beispielsweise durch thermische Spaltung von Copolymeren von Alkyl(meth)acrylat und/oder durch thermische Spaltung der in der mindestens einen Polymerzusammensetzung gegebenenfalls enthaltenen zumindest einen weiteren Komponente. Darüber hinaus können sich bei der thermischen Spaltung auch Oligomere von Alkyl(meth)acrylat bilden, diese fallen im Rahmen der vorliegenden Erfindung ebenfalls unter den Begriff "mindestens eine weitere Komponente".

Beispielsweise ist die mindestens eine weitere Komponente ausgewählt aus der Gruppe bestehend aus Styrol, (Meth)acrylsäure, schwefelhaltigen Verbindungen, Oligomeren, Dimeren, C₁-C₄-Alkylsäuren, Di(meth)acrylatdiestern, C₁-C₄-Alkoholen, hochsiedenden Aromaten, Aldehyden und Ketonen, bevorzugt ist die mindestens eine weitere Komponente ausgewählt aus der Gruppe bestehend aus Styrol, (Meth)acrylsäure, schwefelhaltigen Verbindungen, Oligomeren und Dimeren.

Bevorzugt ist daher auch ein Verfahren, bei dem der erste Gasstrom mindestens eine weitere Komponente, ausgewählt aus der Gruppe bestehend aus Styrol, (Meth)acrylsäure, schwefelhaltigen Verbindungen, Oligomeren und Dimeren, enthält.

Unter hochsiedenden Aromaten werden im Rahmen der vorliegenden Erfindung beispielsweise Phenole, Aniline, Benzophenone, Naphthaline und/oder Pyridine verstanden, die jeweils substituiert oder unsubstituiert sein können.

Für Styrol als mindestens eine weitere Komponente gelten die weiter oben beschriebenen Ausführungen und Bevorzugungen für Styrol entsprechend.

Schwefelhaltige Verbindungen leiten sich insbesondere von gegebenenfalls in der mindestens einen Polymerzusammensetzung enthaltenen schwefelhaltigen Reglern ab und sind insbesondere Mercaptane wie Dodecylmercaptan und mehrwertige Mercaptoverbindungen wie Pentaerythroltetrathioglycolat.

Unter Oligomeren werden im Rahmen der vorliegenden Erfindung insbesondere Oligomere des mindestens einen Alkyl(meth)acrylats, von (Meth)acrylsäure und von Mischungen aus diesen verstanden. Der Begriff "Oligomer" umfasst nicht nur höhere Oligomere, sondern auch niedere Oligomere, wie beispielsweise Trimere, Tetramere und Pentamere. Insbesondere umfasst der Begriff "Oligomer" ein Molekül, das aus drei bis zehn Einheiten aufgebaut ist, wobei die Einheiten aus dem mindestens einen Alkyl(meth)acrylat, (Meth)acrylsäure oder Mischungen daraus erhältlich sind.

Unter Dimeren werden im Rahmen der vorliegenden Erfindung insbesondere Dimere des mindestens einen Alkyl(meth)acrylats, von (Meth)acrylsäure und von Mischungen aus diesen verstanden.

Unter C₁-C₄-Alkylsäuren werden aliphatische Carbonsäuren mit 1 bis 4 Kohlenstoffatomen verstanden. Die C₁-C₄-Alkylsäuren können Verzweigungen aufweisen. Beispielsweise ist die C₁-C₄-Alkylsäure ausgewählt aus der Gruppe bestehend aus Ameisensäure, Essigsäure, Propionsäure, Buttersäure und Isobuttersäure.

Unter Di(meth)acrylatdiestern werden nicht nur Ester von (Meth)acrylsäure mit einem Diol verstanden, sondern auch Ester von (Meth)acrylsäure mit einem Polyol, wie beispielsweise einem Triol. Beispielsweise ist der Di(meth)acrylatdiester ausgewählt aus der Gruppe bestehend aus Ethylenglycoldi(meth)acrylat, Propylenglycoldi(meth)acrylat, Trimethylolpropantri(meth)acrylat 1,4-Butandioldi(meth)acrylat und 1,3-Butandioldi(meth)acrylat.

Unter C₁-C₄-Alkoholen werden Alkohole verstanden, die 1 bis 4 Kohlenstoffatome im Alkylrest aufweisen. Der Alkylrest kann linear oder verzweigt sein. Ebenso ist es möglich, dass er mit Heteroatomen substituiert ist. Beispiele für C₁-C₄-Alkohole sind Methanol, Ethanol, Ethylenglycol, n-Butanol und Isobutanol.

Aldehyde sind dem Fachmann als solche bekannt. Beispielsweise sind die Aldehyde ausgewählt aus der Gruppe bestehend aus Formaldehyd, Acetaldehyd, Methacrolein und Acrolein.

Unter Ketonen werden im Rahmen der vorliegenden Erfindung sowohl Monoketone wie beispielsweise Aceton als auch Diketone wie beispielsweise Diacetyl verstanden. Erfindungsgemäße Ketone sind beispielsweise ausgewählt aus der Gruppe bestehend aus Diacetyl, Aceton, Acetylaceton und Methylethylketon.

Beispielsweise enthält der bei der thermischen Spaltung erhaltene erste Gasstrom 60 bis 99 Gew.-%, bevorzugt 80 bis 98 Gew.-%, des mindestens einen Alkyl(meth)acrylats, jeweils bezogen auf das Gesamtgewicht des ersten Gasstroms.

Beispielsweise enthält der bei der thermischen Spaltung erhaltene erste Gasstrom 0,1 bis 10 Gew.-%, bevorzugt 0,5 bis 5 Gew.-%, des mindestens einen weiteren Alkylesters, jeweils bezogen auf das Gesamtgewicht des ersten Gasstroms.

Beispielsweise enthält der bei der thermischen Spaltung erhaltene erste Gasstrom 0,1 bis 30 Gew.-%, bevorzugt 0,5 bis 18 Gew-%, der mindestens einen weiteren Komponente, jeweils bezogen auf das Gesamtgewicht des ersten Gasstroms.

In Schritt b) wird der in Schritt a) erhaltene erste Gasstrom unter Erhalt eines flüssigen ersten Stroms kondensiert. Der flüssige erste Strom enthält das mindestens eine Alkyl(meth)acrylat und den mindestens einen weiteren Alkylester.

Der flüssige erste Strom wird auch als Recycle Poly(alkyl(meth)acrylat) bezeichnet. Umfasst das Poly(alkyl(meth)acrylat) Poly(methyl(meth)acrylat), so wird der flüssige erste Strom auch als Recycle Poly(methyl(meth)acrylat oder Recycle PMMA bezeichnet.

Der erste Gasstrom kann nach dem Fachmann bekannten Methoden kondensiert werden, beispielsweise kann die Kondensation an einem Kondensator erfolgen.

Beispielsweise wird der erste Gasstrom in Schritt b) bei einer Temperatur im Bereich von -10 °C bis 100 °C; bevorzugt im Bereich von 0 °C bis 90 °C, besonders bevorzugt im Bereich von 20 °C bis 80 °C, kondensiert.

Der Druck bei der Kondensation des ersten Gasstroms in Schritt b) liegt beispielsweise im Bereich von 0,1 bar bis 1,1 bar, bevorzugt im Bereich von 0,3 bar bis 1 bar und insbesondere bevorzugt im Bereich von 0,4 bar bis 0,8 bar.

Bevorzugt erfolgt die Kondensation des ersten Gasstroms durch einsaugen in zuvor bereits kondensierten und gekühlten ersten Gasstrom, wo der eingesaugte erste Gasstrom dann kondensiert. Ein Teilstrom des kondensierten ersten Gasstroms kann dann als flüssiger erster Strom abgetrennt werden, und erster Gasstrom erneut in den kondensierten und gekühlten ersten Gasstrom eingesaugt werden.

Bei der Kondensation geht der erste Gasstrom von der Gasphase in die flüssige Phase über unter Erhalt des flüssigen ersten Stroms.

Üblicherweise ist das im flüssigen ersten Strom enthaltene mindestens eine Alkyl(meth)acrylat dasselbe mindestens eine Alkyl(meth)acrylat, das im ersten Gasstrom enthalten war. Für das im flüssigen ersten Strom enthaltene mindestens eine Alkyl(meth)acrylat gelten daher die zuvor für das im ersten Gasstrom enthaltene mindestens eine Alkyl(meth)acrylat beschriebenen Ausführungen und Bevorzugungen entsprechend.

Üblicherweise ist der im flüssigen ersten Strom enthaltene mindestens eine weitere Alkylester derselbe mindestens eine weitere Alkylester, der im ersten Gasstrom enthalten war. Daher gelten für den im ersten flüssigen Strom enthaltenen mindestens einen weiteren Alkylester die zuvor beschriebenen Ausführungen und Bevorzugungen wie für den im ersten Gasstrom enthaltenen mindestens einen weiteren Alkylester entsprechend.

Der flüssige erste Strom kann zusätzlich die gegebenenfalls im ersten Gasstrom enthaltene mindestens eine weitere Komponente enthalten. Für die mindestens eine weitere Komponente gelten die zuvor beschriebenen Ausführungen und Bevorzugungen entsprechend.

Erfindungsgemäß bevorzugt wird nach Schritt a) und vor Schritt b) der erste Gasstrom destilliert. Dabei wird ein erster Kopfstrom, der das mindestens eine Alkyl(meth)acrylat und den mindestens einen weiteren Alkylester enthält, und ein erster Sumpfstrom, der mindestens eine von dem mindestens einen Alkyl(meth)acrylat und dem mindestens einen weiteren Alkylester verschiedene Komponente enthält, erhalten. In dieser Ausführungsform wird dann der bei der Destillation erhaltene erste Kopfstrom in Schritt b) kondensiert.

Bevorzugt ist daher auch ein Verfahren, bei dem der erste Gasstrom nach Schritt a) und vor Schritt b) destilliert wird unter Erhalt eines ersten Kopfstroms, der das mindestens eine Alkyl(meth)acrylat und den mindestens einen weiteren Alkylester enthält, und eines ersten Sumpfstroms, der mindestens eine von dem mindestens einen Alkyl(meth)acrylat und dem mindestens einen weiteren Alkylester verschiedene Komponente enthält, wobei der erste Kopfstrom in Schritt b) kondensiert wird.

Der erste Gasstrom kann kondensiert werden bevor er nach Schritt a) und vor Schritt b) destilliert wird. Verfahren zur Kondensation des ersten Gasstroms sind als solche bekannt und beispielsweise weiter oben beschrieben. Unter "Destillation des ersten Gasstroms" wird also im Rahmen der vorliegenden Erfindung nicht nur die Destillation des ersten Gasstroms in der Gasphase bezeichnet, sondern auch und insbesondere die Destillation des ersten Gasstroms nachdem er kondensiert wurde.

Die Destillation des ersten Gasstroms kann nach dem Fachmann bekannten Methoden und in dem Fachmann bekannten Reaktoren erfolgen. Beispielsweise kann der erste Gasstrom in eine Destillationskolonne und/oder in eine Rektifikationskolonne überführt und dort destilliert werden. Bei der Destillation des ersten Gasstroms werden Komponenten, die im ersten Gasstrom enthalten sind und die einen höheren Siedepunkt als das mindestens eine Alkyl(meth)acrylat aufweisen, im ersten Sumpfstrom erhalten, während Komponenten, die im ersten Gasstrom enthalten sind und denselben oder einen niedrigeren Siedepunkt als das mindestens eine Alkyl(meth)acrylat aufweisen, im ersten Kopfstrom erhalten werden.

Die Destillation kann beispielsweise bei einer Temperatur im Bereich von 40 bis 140 °C stattfinden. Bevorzugt liegt die Sumpftemperatur bei der Destillation im Bereich von 95 bis 130 °C, besonders bevorzugt im Bereich von 97 bis 126 °C.

Die Destillation kann beispielsweise bei einem Druck im Bereich von 10 bis 250 mbar stattfinden, bevorzugt im Bereich von 15 bis 150 mbar.

Bei der Destillation des ersten Gasstroms wird ein erster Kopfstrom erhalten. Der erste Kopfstrom enthält das mindestens eine Alkyl(meth)acrylat und den mindestens einen weiteren Alkylester, die bereits im ersten Gasstrom enthalten waren.

Der erste Kopfstrom kann darüber hinaus weitere Komponenten enthalten. Insbesondere enthält der erste Kopfstrom die im ersten Gasstrom enthaltene mindestens eine weitere Komponente, die einen niedrigeren oder genauso hohen Siedepunkt aufweist wie das mindestens eine Alkyl(meth)acrylat und der mindestens eine weitere Alkylester. Daher enthält der erste Kopfstrom üblicherweise mindestens eine weitere Komponente ausgewählt aus der Gruppe bestehend aus Methylpropionat, Ethylpropionat, Methylisobutyrat, Methylpivalat, Methyl-3-methoxyisobutyrat und Dicarbonsäurediestern.

Beispielsweise enthält der bei der Destillation erhaltene erste Kopfstrom 60 bis < 99,8 Gew.-%, bevorzugt 85 bis 98 Gew.-%, des mindestens einen Alkyl(meth)acrylats, jeweils bezogen auf das Gesamtgewicht des ersten Kopfstroms.

Beispielsweise enthält der bei der Destillation erhaltene erste Kopfstrom 0,1 bis 10 Gew.-%, bevorzugt 0,5 bis 5 Gew.-%, des mindestens einen weiteren Alkylesters, jeweils bezogen auf das Gesamtgewicht des ersten Kopfstroms.

Beispielsweise enthält der bei der Destillation erhaltene erste Kopfstrom 0,1 bis 30 Gew.-%, bevorzugt 0,5 bis 14,5 Gew-%, der mindestens einen weiteren Komponente, jeweils bezogen auf das Gesamtgewicht des ersten Kopfstroms.

Außerdem wird ein erster Sumpfstrom erhalten. Unter einem "Sumpfstrom" wird im Rahmen der vorliegenden Erfindung nicht nur ein Sumpfprodukt verstanden, das kontinuierlich aus der Destillation, insbesondere aus dem Reaktor, entfernt wird, sondern auch ein Sumpfprodukt, das, beispielsweise bei diskontinuierlicher Fahrweise, als Destillationsrückstand im Reaktor verbleibt und erst zu einem späteren Zeitpunkt aus dem Reaktor entfernt wird.

Der erste Sumpfstrom enthält mindestens eine von dem mindestens einen Alkyl(meth)acrylat und dem mindestens einen weiteren Alkylester verschiedene Komponente. Diese Komponente ist üblicherweise mindestens eine der im ersten Gasstrom enthaltenen mindestens einen weiteren Komponenten. Insbesondere weist diese mindestens eine weitere Komponente üblicherweise eine höhere Siedetemperatur auf als das im ersten Gasstrom enthaltene mindestens eine Alkyl(meth)acrylat und als der im ersten Gasstrom enthaltene mindestens eine weitere Alkylester. Beispielsweise ist diese mindestens eine weitere Komponente ausgewählt aus der Gruppe bestehend aus schwefelhaltigen Verbindungen, hochsiedende Aromaten, Oligomeren und Dimeren. Für die schwefelhaltigen Verbindungen, die hochsiedenden Aromaten, die Oligomere und die Dimere gelten die zuvor für die in dem ersten Gasstrom enthaltenen schwefelhaltigen Verbindungen, die hochsiedenden Aromaten, die Oligomere und die Dimere beschriebenen Ausführungen und Bevorzugungen entsprechend.

Der erste Sumpfstrom enthält daher bevorzugt schwefelhaltige Verbindungen, hochsiedende Aromaten, Oligomere und/oder Dimere.

In Schritt c) wird der in Schritt b) erhaltene flüssige erste Strom mit einem weiteren Strom gemischt unter Erhalt eines Mischstroms. Der weitere Strom enthält mindestens ein weiteres Alkyl(meth)acrylat und ist Teil eines Poly(alkyl(meth)acrylat)-Herstellverfahrens. Der erhaltene Mischstrom umfasst den flüssigen ersten Strom und den weiteren Strom.

Enthält der weitere Strom als weiteres Alkyl(meth)acrylat Methyl(meth)acrylat und ist Teil eines Poly(methyl(meth)acrylat)-Herstellverfahrens, so wird der weitere Strom auch als Rein Methyl(meth)acrylat oder Rein MMA bezeichnet.

Es versteht sich von selbst, dass der erste flüssige Strom von dem weiteren Strom verschieden ist. Beispielsweise enthält der flüssige erste Strom im Bereich von 90 bis < 99,8 Gew.-% des mindestens einen Alkyl(meth)acrylats, bezogen auf das Gesamtgewicht des flüssigen ersten Stroms. Der weitere Strom enthält beispielsweise mindestens 99,8 Gew.-% des mindestens einen weiteren Alkyl(meth)acrylats, bezogen auf das Gesamtgewicht des weiteren Stroms. Vorzugsweise enthält der weitere Strom mindestens 99,8 Gew.-% Methyl(meth)acrylat bezogen auf das Gesamtgewicht des weiteren Stroms und der weitere Strom ist erhältlich durch ein Methyl(meth)acrylat-Herstellverfahren unter Verwendung von C₁-, C₂-, C₃- und/oder C₄-Rohstoffen (Methanol, Ethylen, Aceton, Blausäure, Isobuten und/oder Methyl-tert.-Butylether). Diese Herstellverfahren sind dem Fachmann als solche bekannt.

Beispielsweise werden bis zu 50 Gew.-%, bevorzugt bis zu 40 Gew.-% des flüssigen ersten Stroms mit dem weiteren Strom gemischt, bezogen auf das Gesamtgewicht des erhaltenen Mischstroms. Beispielsweise werden mindestens 1,5 Gew.-%, bevorzugt mindestens 5 Gew.-% des flüssigen ersten Stroms mit dem weiteren Strom gemischt, bezogen auf das Gesamtgewicht des erhaltenen Mischstroms.

Bevorzugt ist daher auch ein Verfahren, bei dem in Schritt c) bis zu 50 Gew.-% des flüssigen ersten Stroms mit dem weiteren Strom gemischt werden, bezogen auf das Gesamtgewicht des erhaltenen Mischstroms.

Beispielsweise enthält der flüssige erste Strom im Bereich von 90 bis < 99,8 Gew.-% des Alkyl(meth)acrylats, bevorzugt im Bereich von 94 bis 98 Gew.-%, jeweils bezogen auf das Gesamtgewicht des flüssigen ersten Stroms, und es werden 1,5 bis 25 Gew.-%, bevorzugt 9 bis 15 Gew.-% des flüssigen ersten Stroms mit dem weiteren Strom gemischt, bezogen auf das Gesamtgewicht des erhaltenen Mischstroms. Diese Ausführungsform ist bevorzugt, wenn der optionale Schritt d) nicht durchgeführt wird.

Wird in einer bevorzugten Ausführungsform der vorliegenden Erfindung der optionale Schritt d) durchgeführt, so enthält der flüssige erste Strom beispielsweise im Bereich von 90 bis < 99,8 Gew.-% des Alkyl(meth)acrylats, bezogen auf das Gesamtgewicht des flüssigen ersten Stroms, und es werden 1,5 bis 50 Gew.-%, bevorzugt 5 bis 20 Gew.-% des flüssigen ersten Stroms mit dem weiteren Strom gemischt, bezogen auf das Gesamtgewicht des erhaltenen Mischstroms.

Bevorzugt ist daher auch ein Verfahren, bei dem der flüssige erste Strom im Bereich von 90 bis < 99,8 Gew.-% des Alkyl(meth)acrylats enthält, bezogen auf das Gesamtgewicht des flüssigen ersten Stroms, und dass 1,5 bis 50 Gew.-% des flüssigen ersten Stroms mit dem weiteren Strom gemischt werden, bezogen auf das Gesamtgewicht des erhaltenen Mischstroms.

Der weitere Strom, mit dem der flüssige erste Strom gemischt wird, enthält mindestens ein weiteres Alkyl(meth)acrylat. "Mindestens ein weiteres Alkyl(meth)acrylat" bedeutet im Rahmen der vorliegenden Erfindung sowohl genau ein weiteres Alkyl(meth)acrylat als auch eine Mischung aus zwei oder mehreren weiteren Alkyl(meth)acrylaten. Genau ein weiteres Alkyl(meth)acrylat ist bevorzugt.

Für das im weiteren Strom enthaltene mindestens eine weitere Alkyl(meth)acrylat gelten die zuvor für das im ersten Gasstrom enthaltene mindestens eine Alkyl(meth)acrylat beschriebenen Ausführungen und Bevorzugungen entsprechend. Das mindestens eine weitere Alkyl(meth)acrylat ist daher beispielsweise ausgewählt aus der Gruppe bestehend aus C₁-C₄-Alkyl(meth)acrylaten. Insbesondere bevorzugt ist das im weiteren Strom enthaltene Alkyl(meth)acrylat Methyl(meth)acrylat.

Das im flüssigen ersten Strom enthaltene mindestens eine Alkyl(meth)acrylat umfasst bevorzugt dasselbe Alkyl(meth)acrylat wie das Alkyl(meth)acrylat, das das mindestens eine weitere Alkyl(meth)acrylat des weiteren Stroms umfasst.

Es ist erfindungsgemäß bevorzugt, dass, bezogen auf das Gesamtgewicht des im flüssigen ersten Stroms enthaltenen mindestens einen Alkyl(meth)acrylats, mindestens 80 Gew.-%, bevorzugt mindestens 90 Gew.-% des im flüssigen ersten Stroms enthaltenen mindestens einen Alkyl(meth)acrylats, dasselbe Alkyl(meth)acrylat ist wie das im weiteren Strom enthaltene mindestens eine weitere Alkyl(meth)acrylat.

Der weitere Strom ist Teil eines Poly(alkyl(meth)acrylat)-Herstellverfahrens. Unter einem "Poly(alkyl(meth)acrylat)-Herstellverfahren" wird im Rahmen der vorliegenden Erfindung ein Verfahren zur Herstellung eines Poly(alkyl(meth)acrylats) durch Polymerisation von mindestens einem Alkyl(meth)acrylat, gegebenenfalls in Gegenwart von von dem Alkyl(meth)acrylat verschiedenen Monomeren, verstanden. Die Polymerisation kann beispielsweise eine radikalische oder eine anionische Polymerisation sein, eine radikalische Polymerisation ist bevorzugt. Weiterhin bevorzugt ist die Polymerisation eine radikalische Polymerisation in Emulsion, Lösung oder Substanz, bevorzugt in Substanz. Insbesondere bevorzugt ist die Polymerisation eine radikalische Polymerisation in Substanz, wobei zunächst das mindestens eine Alkyl(meth)acrylat gegebenenfalls in Gegenwart von von dem Alkyl(meth)acrylat verschiedenen Monomeren, teilweise polymerisiert wird unter Erhalt eines Sirups und anschließend der Sirup in einem Entgasungsextruder polymerisiert wird unter Erhalt einer Polymermischung, die das Poly(alkyl(meth)acrylat) enthält.

Das Poly(alkyl(meth)acrylat) des Poly(alkyl(meth)acrylat)-Herstellverfahrens kann gleich oder verschieden von dem in der mindestens einen Polymerzusammensetzung enthaltenen Poly(alkyl(meth)acrylat) sein. Für das Poly(alkyl(meth)acrylat) des Poly(alkyl(meth)acrylat)-Herstellverfahrens gelten die zuvor für das in der mindestens einen Polymerzusammensetzung enthaltene Poly(alkyl(meth)acrylat) beschriebenen Ausführungen und Bevorzugungen entsprechend.

Bevorzugt ist das Poly(alkyl(meth)acrylat) daher ein Poly(methyl(meth)acrylat).

Bevorzugt ist daher auch ein Verfahren, bei dem das in der Polymermischung enthaltene Poly(alkyl(meth)acrylat) ein Poly(methyl(meth)acrylat) ist.

Der weitere Strom ist Teil eines Poly(alkyl(meth)acrylat)-Herstellverfahrens. Der weitere Strom kann beispielsweise ein Eduktstrom, der beispielsweise direkt aus der Herstellung des im weiteren Strom enthaltenen mindestens einen weiteren Alkyl(meth)acrylats stammen. Darüber hinaus ist es möglich und erfindungsgemäß bevorzugt, dass der weitere Strom in dem Poly(alkyl(meth)acrylat)-Herstellverfahren erhalten wird. Beispielsweise kann der weitere Strom der weiter unten beschriebene zweite Kopfstrom sein und/oder der in Schritt g) erhaltene Kondensatstrom.

Der flüssige erste Strom kann nach dem Fachmann bekannten Methoden mit dem weiteren Strom gemischt werden. Beispielsweise und erfindungsgemäß bevorzugt wird der flüssige erste Strom in eine Anlage zur Herstellung eines Poly(alkyl(meth)acrylats) eingespeist, die den weiteren Strom enthält. Der erhaltene Mischstrom ist dann vorzugsweise ebenfalls in der Anlage zur Herstellung eines Poly(alkyl(meth)acrylats) enthalten. Der Mischstrom ist dann vorzugsweise ebenfalls Teil des Poly(alkyl(meth)acrylat)-Herstellverfahrens.

Bevorzugt ist daher auch ein Verfahren, bei dem der in Schritt c) erhaltene Mischstrom Teil eines Poly(alkyl(meth)acrylat)-Herstellverfahrens ist.

Der Mischstrom umfasst den flüssigen ersten Strom und den weiteren Strom. Der Mischstrom umfasst daher üblicherweise dieselben Komponenten, die im flüssigen ersten Strom und in dem weiteren Strom enthalten waren. Daher umfasst der Mischstrom üblicherweise das mindestens eine Alkyl(meth)acrylat, den mindestens einen weiteren Alkylester, das mindestens eine weitere Alkyl(meth)acrylat sowie gegebenenfalls die mindestens eine weitere Komponente.

Der flüssige erste Strom kann an beliebiger Stelle des Poly(alkyl(meth)acrylat)-Herstellverfahrens mit dem weiteren Strom gemischt werden. Bevorzugt wird der flüssige erste Strom unmittelbar vor oder in dem weiter unten beschriebenen Aufreinigungsteil des Poly(alkyl(meth)acrylat)-Herstellverfahrens mit dem weiteren Strom gemischt. Dies ist vorteilhaft, da dann die zumindest teilweise Abtrennung des mindestens einen weiteren Alkylesters im optionalen Schritt d) in dem Aufreinigungsteil des Poly(alkyl(meth)acrylat)-Herstellverfahrens stattfinden kann.

In dem optionalen Schritt d) wird der mindestens eine weitere Alkylester zumindest teilweise aus dem in Schritt c) erhaltenen Mischstrom abgetrennt unter Erhalt eines aufgereinigten Mischstroms. Der aufgereinigte Mischstrom enthält das mindestens eine Alkyl(meth)acrylat, das mindestens eine weitere Alkyl(meth)acrylat und Reste des mindestens einen weiteren Alkylesters. In Schritt e) wird dann der in Schritt d) erhaltene aufgereinigte Mischstrom teilweise polymerisiert. Die Durchführung von Schritt d) ist bevorzugt.

Bevorzugt ist daher auch ein Verfahren, bei dem das Verfahren zusätzlich den folgenden Schritt d) umfasst
d) zumindest teilweises Abtrennen des mindestens einen weiteren Alkylesters aus dem in Schritt c) erhaltenen Mischstrom unter Erhalt eines aufgereinigten Mischstroms, der das mindestens eine Alkyl(meth)acrylat, das mindestens eine weitere Alkyl(meth)acrylat und Reste des mindestens einen weiteren Alkylesters enthält,
wobei dann in Schritt e) der in Schritt d) erhaltene aufgereinigte Mischstrom teilweise polymerisiert wird.

Die zumindest teilweise Abtrennung des mindestens einen weiteren Alkylesters kann nach beliebigen Verfahren erfolgen. Beispielsweise kann der mindestens eine weitere Alkylester durch Destillation zumindest teilweise aus dem in Schritt c) erhaltenen Mischstrom abgetrennt werden.

Bevorzugt erfolgt die zumindest teilweise Abtrennung des mindestens einen weiteren Alkylesters im weiter unten beschriebenen Aufreinigungsteil des Poly(alkyl(meth)acrylat)-Herstellverfahrens.

Der aufgereinigte Mischstrom enthält Reste des mindestens einen weiteren Alkylesters. Unter dem Begriff "Reste des mindestens einen weiteren Alkylesters" werden im Rahmen der vorliegenden Erfindung im Bereich von 0 bis 8 Gew.-%, bevorzugt im Bereich von 0,1 bis 3 Gew.-% und insbesondere bevorzugt im Bereich von 0,1 bis 2 Gew.-% des mindestens einen weiteren Alkylesters verstanden, jeweils bezogen auf das Gesamtgewicht des aufgereinigten Mischstroms.

In Schritt e) des erfindungsgemäßen Verfahrens wird der in Schritt c) erhaltene Mischstrom teilweise polymerisiert. Dabei wird ein Sirup erhalten, der teilweise polymerisiertes mindestens ein Alkyl(meth)acrylat, teilweise polymerisiertes mindestens ein weiteres Alkyl(meth)acrylat und den mindestens einen weiteren Alkylester enthält.

Wird der optionale Schritt d) durchgeführt, dann wird in Schritt e) des erfindungsgemäßen Verfahrens der in Schritt d) erhaltene aufgereinigte Mischstrom teilweise polymerisiert unter Erhalt eines Sirups, der teilweise polymerisiertes mindestens ein Alkyl(meth)acrylat, teilweise polymerisiertes mindestens ein weiteres Alkyl(meth)acrylat und Reste des mindestens einen weiteren Alkylesters enthält.

Unter "teilweiser Polymerisation" wird im Rahmen der vorliegenden Erfindung verstanden, dass der Umsatzgrad des mindestens einen Alkyl(meth)acrylats und des mindestens einen weiteren Alkyl(meth)acrylats insgesamt im Bereich von 20 bis 60 % liegt, bevorzugt im Bereich von 35 bis 50 % bezogen auf die im Mischstrom, bevorzugt im aufgereinigten Mischstrom, enthaltene Menge an mindestens einem Alkyl(meth)acrylat und mindestens einem weiteren Alkyl(meth)acrylat. Der Umsatzgrad an dem mindestens einen Alkyl(meth)acrylat und dem mindestens einen weiteren Alkyl(meth)acrylat insgesamt ist definiert als das Verhältnis der Menge an dem mindestens einen Alkyl(meth)acrylat und dem mindestens einen weiteren Alkyl(meth)acrylat insgesamt in dem in Schritt e) erhaltenen Sirup zu der Menge an dem mindestens einen Alkyl(meth)acrylat und dem mindestens einen weiteren Alkyl(meth)acrylat insgesamt in dem in Schritt c) erhaltenen Mischstrom. Die Menge an dem mindestens einen Alkyl(meth)acrylat und dem mindestens einen weiteren Alkyl(meth)acrylat insgesamt wird üblicherweise mittels GC-Analyse bestimmt.

Bevorzugt ist daher auch ein Verfahren, bei dem bei der teilweisen Polymerisation in Schritt e) der Umsatzgrad des mindestens einen Alkyl(meth)acrylats und des mindestens einen weiteren Alkyl(meth)acrylats insgesamt im Bereich von 20 bis 60 % liegt, bezogen auf die im aufgereinigten Mischstrom enthaltene Menge an mindestens einem Alkyl(meth)acrylat und mindestens einem weiteren Alkyl(meth)acrylat.

Die teilweise Polymerisation in Schritt e) kann nach dem Fachmann bekannten Methoden stattfinden. Bevorzugt findet die teilweise Polymerisation in Gegenwart von mindestens einem Hilfsstoff statt.

Der mindestens eine Hilfsstoff wird auch als mindestens ein Additiv bezeichnet.

Bevorzugt ist daher auch ein Verfahren, bei dem die teilweise Polymerisation in Schritt e) in Gegenwart von mindestens einem Hilfsstoff stattfindet.

Der mindestens eine Hilfsstoff kann dem Mischstrom an beliebiger Stelle zugeführt werden, beispielsweise in dem weiter unten beschriebenen Reaktor für die teilweise Polymerisation. Bevorzugt wird der mindestens eine Hilfsstoff dem Mischstrom zugeführt bevor der Mischstrom in den Reaktor überführt wird.

Als mindestens ein Hilfsstoff eignen sich beispielsweise dem Fachmann bekannte Hilfsstoffe, die die teilweise Polymerisation initiieren und/oder beeinflussen können.

Beispielsweise ist der mindestens eine Hilfsstoff ausgewählt aus der Gruppe bestehend aus Initiatoren, Reglern und Trennmitteln.

Bevorzugt ist daher auch ein Verfahren, bei dem der mindestens ein Hilfsstoff ausgewählt ist aus der Gruppe bestehend aus Initiatoren, Reglern und Trennmitteln.

Für die Initiatoren, die Regler und die Trennmittel gelten die zuvor beschriebenen Ausführungen und Bevorzugungen entsprechend.

Die teilweise Polymerisation in Schritt e) kann beispielsweise radikalisch oder anionisch erfolgen. Bevorzugt erfolgt sie radikalisch. Weiterhin kann die teilweise Polymerisation in Emulsion, Lösung oder Substanz stattfinden. Bevorzugt in Substanz. Als Reaktor eignen sich dem Fachmann bekannte Reaktoren für teilweise Polymerisationen. Beispielsweise kann die teilweise Polymerisation in einem Rührkesselreaktor, bevorzugt in einem kontinuierlichen Rührkesselreaktor, stattfinden.

Die Temperatur bei der teilweisen Polymerisation in Schritt e) liegt beispielsweise im Bereich von 120 bis 170 °C, bevorzugt im Bereich von 130 bis 160 °C.

Beispielsweise findet die teilweise Polymerisation bei einem Druck im Bereich von 1 bis 5 bara statt, bevorzugt im Bereich von 1,5 bis 3 bara.

Bei der teilweisen Polymerisation wird ein Sirup erhalten. Der Sirup enthält teilweise polymerisiertes mindestens ein Alkyl(meth)acrylat, teilweise polymerisiertes mindestens ein weiteres Alkyl(meth)acrylat und den mindestens einen weiteren Alkylester, wenn der optionale Schritt d) durchgeführt wird Reste des mindestens einen weiteren Alkylesters. Darüber hinaus enthält der erhaltene Sirup üblicherweise den mindestens einen Hilfsstoff, der bei der teilweisen Polymerisation eingesetzt wurde und/oder dessen Reaktionsprodukte.

Unter dem Begriff "teilweise polymerisiertes mindestens ein Alkyl(meth)acrylat" wird im Rahmen der vorliegenden Erfindung verstanden, dass Teile des mindestens einen Alkyl(meth)acrylats mit sich selbst und/oder mit dem mindestens einen weiteren Alkyl(meth)acrylat polymerisiert sind und dass Teile des mindestens einen Alkyl(meth)acrylats als Monomer vorliegen. Unter dem Begriff "teilweise polymerisiertes mindestens ein weiteres Alkyl(meth)acrylat" wird im Rahmen der vorliegenden Erfindung verstanden, dass Teile des mindestens einen weiteren Alkyl(meth)acrylats mit sich selbst und/oder mit dem mindestens einen Alkyl(meth)acrylat polymerisiert sind und dass Teile des mindestens einen weiteren Alkyl(meth)acrylats als Monomer vorliegen.

Bei der Polymerisation des mindestens einen Alkyl(meth)acrylats mit sich selbst und/oder mit dem mindestens einen weiteren Alkyl(meth)acrylat und bei der Polymerisation des mindestens einen weiteren Alkyl(meth)acrylats mit sich selbst und/oder mit dem mindestens einen Alkyl(meth)acrylat, bilden sich Polymere des mindestens einen Alkyl(meth)acrylats mit sich selbst und/oder dem mindestens einen weiteren Alkyl(meth)acrylat sowie des mindestens einen weiteren Alkyl(meth)acrylats mit sich selbst und/oder dem mindestens einen Alkyl(meth)acrylat. Darüber hinaus bilden sich Oligomere des mindestens einen Alkyl(meth)acrylats, des mindestens einen weiteren Alkyl(meth)acrylats und von Mischungen aus diesen.

Unter "Oligomeren" werden in diesem Zusammenhang Oligomere des mindestens einen Alkyl(meth)acrylats, des mindestens einen weiteren Alkyl(meth)acrylats und von Mischungen aus diesen Verstanden. Der Begriff "Oligomer" umfasst nicht nur höhere Oligomere, sondern auch niedere Oligomere wie beispielsweise Dimere, Trimere, Tetramere und Pentamere. Insbesondere umfasst der Begriff "Oligomer" in diesem Zusammenhang ein Molekül, das aus zwei bis zehn Einheiten aufgebaut ist, wobei die Einheiten aus dem mindestens einen Alkyl(meth)acrylat, dem mindestens einen weiteren Alkyl(meth)acrylat und Mischungen daraus erhältlich sind.

Unter "Polymeren" werden in diesem Zusammenhang Polymere des mindestens einen Alkyl(meth)acrylats, des mindestens einen weiteren Alkyl(meth)acrylats und von Mischungen aus diesen verstanden. Beispielsweise umfasst ein Polymer in diesem Zusammenhang 1000 bis 100000 Einheiten, wobei die Einheiten aus dem mindestens einen Alkyl(meth)acrylat, dem mindestens einen weiteren Alkyl(meth)acrylat und Mischungen daraus erhältlich sind.

In Schritt f) wird der in Schritt e) erhaltene Sirup in einem Entgasungsextruder polymerisiert. Dabei wird eine Polymermischung, die das Poly(alkyl(meth)acrylat) enthält, erhalten.

Die Temperatur im Entgasungsextruder in Schritt f) liegt beispielsweise im Bereich von 150 bis 290 °C, bevorzugt im Bereich von 170 bis 270 °C.

Der Druck im Entgasungsbereich des Entgasungsextruders in Schritt f) liegt beispielsweise im Bereich von 0,1 bara bis 2 bara, bevorzugt im Bereich von 0,15 bara bis 0,3 bara.

Als Entgasungsextruder eignen sich dem Fachmann bekannte Entgasungsextruder. Geeignete Entgasungsextruder sind beispielsweise in der EP 2 212 091 A1 und in der WO 2009/040190 A1 beschrieben.

Üblicherweise wird der in Schritt e) erhaltene Sirup dem Entgasungsextruder über eine Materialeinspeisung zugeführt und dann in diesem fortbewegt, wobei der Sirup polymerisiert unter Erhalt der Polymermischung. Der Sirup und die Polymermischung werden also entlang des Entgasungsextruders gefördert. Am Extruderaustrag wird die erhaltene Polymermischung aus dem Extruder ausgetragen. Der Extruderaustrag ist üblicherweise an dem der Materialeinspeisung entgegengesetzten Ende des Extruders angeordnet.

Bei der Polymerisation in Schritt f) wird die Polymermischung erhalten. Die Polymermischung enthält das Poly(alkyl(meth)acrylat). Zudem kann die Polymermischung Komponenten des Sirups enthalten.

Für das in der Polymermischung enthaltene Poly(alkyl(meth)acrylat) gelten die zuvor beschriebenen Ausführungen und Bevorzugungen entsprechend.

In Schritt g) des erfindungsgemäßen Verfahrens wird der in Schritt e) erhaltene Sirup und/oder die in Schritt f) erhaltene Polymermischung in dem Entgasungsextruder entgast unter Erhalt eines Kondensatstroms. Der Kondensatstrom enthält das mindestens eine Alkyl(meth)acrylat, das mindestens eine weitere Alkyl(meth)acrylat, deren Oligomere und den des mindestens einen weiteren Alkylester.

Die Entgasung in dem Entgasungsextruder kann nach dem Fachmann bekannten Methoden stattfinden. Bevorzugt findet die Polymerisation in Schritt f) zeitgleich mit der Entgasung in Schritt g) statt.

Bevorzugt ist daher auch ein Verfahren, bei dem die Schritte f) und g) zeitgleich durchgeführt werden.

Unter "Entgasung" wird im Rahmen der vorliegenden Erfindung verstanden, dass leichtflüchtige Bestandteile des Sirups und/oder der Polymermischung, also insbesondere das mindestens eine Alkyl(meth)acrylat, das mindestens einen weitere Alkyl(meth)acrylat, deren Oligomere und der mindestens eine weitere Alkylester, aus dem Sirup und/oder der Polymermischung entfernt werden. Diese leichtflüchtigen Bestandteile werden als Kondensatstrom erhalten.

Der Kondensatstrom enthält beispielsweise im Bereich von 75 Gew.-% bis 85 Gew.-% des mindestens einen Alkyl(meth)acrylats und des mindestens einen weiteren Alkyl(meth)acrylats insgesamt, im Bereich von 0,1 Gew.-% bis 5 Gew.-% des mindestens einen weiteren Alkylesters und im Bereich von 10 Gew.-% bis 20 Gew.-% sonstige Bestandteile, jeweils bezogen auf das Gesamtgewicht des Kondensatstroms. Die sonstigen Bestandteile umfassen beispielsweise Oligomere des mindestens einen Alkyl(meth)acrylats und des mindestens einen weiteren Alkyl(meth)acrylats.

Die Entgasung in Schritt g) kann in dem Fachmann bekannten Entgasungsextrudern durchgeführt werden. Bevorzugt erfolgt die Entgasung in einem Entgasungsextruder wie er beispielsweise in der EP 2 212 091 A1 und in der WO 2009/040190 A1 beschrieben ist.

Es ist bevorzugt, dass die Entfernung des Kondensatstroms im Wesentlichen entgegengesetzt zur Förderrichtung des Sirups und/oder der Polymermischung erfolgt. Die Polymermischung wird also in zur Entgasung entgegengesetzter Richtung aus dem Entgasungsextruder herausgefördert.

Bevorzugt ist daher auch ein Verfahren, bei dem die Entgasung in Schritt g) im Gegenstrom zur Förderrichtung der in Schritt f) erhaltenen Polymermischung erfolgt.

Diese Art von Entgasungsextruder ist beispielsweise in der EP 2 212 091 A1 und in der WO 2009/040190 A1 beschrieben.

Es ist weiterhin bevorzugt, dass die Entgasung in mindestens zwei Schritten erfolgt, beispielsweise erfolgt eine erste Entgasung im ersten Drittel des Entgasungsextruders und eine zweite Entgasung im letzten Drittel des Entgasungsextruders. Die erste Entgasung erfolgt bevorzugt bei Umgebungsdruck, während die zweite Entgasung bei vermindertem Druck erfolgt.

Der Kondensatstrom wird üblicherweise gasförmig erhalten. Es ist möglich und erfindungsgemäß bevorzugt, dass der Kondensatstrom im Anschluss an Schritt g) und vor Schritt h) kondensiert wird.

Daher wird üblicherweise zunächst ein Entgasungsstrom erhalten, der dann zu einem Kondensatstrom kondensiert wird. Erfolgt die Entgasung im Entgasungsextruder in mindestens zwei Schritten, so wird bei der ersten Entgasung beispielsweise ein erster Entgasungsstrom erhalten und bei der zweiten Entgasung ein zweiter Entgasungsstrom.

In Schritt h) wird der mindestens eine weitere Alkylester aus dem in Schritt g) erhaltenen Kondensatstrom entfernt unter Erhalt eines Alkyl(meth)acrylatstroms. Der Alkyl(meth)acrylatstrom enthält das mindestens einen Alkyl(meth)acrylat und das mindestens eine weitere Alkyl(meth)acrylat.

Wird in einer erfindungsgemäß bevorzugten Ausführungsform der optionale Schritt d) durchgeführt, so werden in Schritt h) Reste des mindestens einen weiteren Alkylesters aus dem in Schritt g) erhaltenen Kondensatstrom entfernt. Die nachfolgend beschriebenen Ausführungen und Bevorzugungen für den mindestens einen weiteren Alkylester gelten daher entsprechend für die Reste des mindestens einen weiteren Alkylesters.

Der mindestens eine weitere Alkylester wird üblicherweise im Aufreinigungsteil des Poly(alkyl(meth)acrylat)-Herstellverfahrens entfernt.

Unter dem Begriff "Aufreinigungsteil" wird im Rahmen der vorliegenden Erfindung der Teil des Poly(alkyl(meth)acrylat)-Herstellverfahrens verstanden, in dem der Kondensatstrom aufgereinigt wird, sodass der Alkyl(meth)acrylatstrom erhalten wird. Insbesondere wird im Aufreinigungsteil der mindestens eine weitere Alkylester zumindest teilweise abgetrennt, sowie gegebenenfalls in dem Kondensatstrom enthaltene Oligomere. Der Aufreinigungsteil umfasst üblicherweise Einrichtungen zur Abtrennung von Komponenten, wie beispielsweise Destillationskolonnen, Rektifikationskolonnen und/oder Dünnschichtverdampfer.

Verfahren zur Aufreinigung des Kondensatstroms und insbesondere zur Abtrennung des mindestens einen weiteren Alkylesters aus dem Kondensatstrom sind als solche bekannt. Beispielsweise kann der mindestens eine weitere Alkylester mittels Destillation entfernt werden. Bevorzugt erfolgt die Abtrennung des mindestens einen weiteren Alkylesters in mindestens zwei Schritten.

Beispielsweise umfasst Schritt h) den folgenden Schritt h1):
h1) Trennung des Kondensatstroms in einen zweiten Kopfstrom, der das mindestens eine weitere Alkyl(meth)acrylat und den mindestens einen weiteren Alkylester enthält, und in einen zweiten Sumpfstrom, der Oligomere des mindestens einen Alkyl(meth)acrylats und Oligomere des mindestens einen weiteren Alkyl(meth)acrylats enthält.

Die Trennung des Kondensatstoms in den zweiten Kopfstrom und den zweiten Sumpfstrom kann nach dem Fachmann bekannten Methoden erfolgen. Beispielsweise mittels Destillation und/oder Rektifikation und/oder Dünnschichtverdampfung.

Bevorzugt wird im Anschluss an Schritt h1) der folgende Schritt h2) durchgeführt:
h2) Destillation des in Schritt h1) erhaltenen zweiten Kopfstroms unter Erhalt eines dritten Kopfstroms, der den mindestens einen weiteren Alkylester enthält und eines dritten Sumpfstroms, der das mindestens eine Alkyl(meth)acrylat und das mindestens eine weitere Alkyl(meth)acrylat enthält.

Bevorzugt ist daher auch ein Verfahren, bei dem die Abtrennung in Schritt h) die folgenden Schritte umfasst:
h1) Trennung des Kondensatstroms in einen zweiten Kopfstrom, der das mindestens eine Alkyl(meth)acrylat, das mindestens eine weitere Alkyl(meth)acrylat und den mindestens einen weiteren Alkylester enthält, und einen zweiten Sumpfstrom, der Oligomere des mindestens einen Alkyl(meth)acrylats und Oligomere des mindestens einen weiteren Alkyl(meth)acrylats enthält,
h2) Destillation des in Schritt h1) erhaltenen zweiten Kopfstroms unter Erhalt eines dritten Kopfstroms, der den mindestens einen weiteren Alkylester enthält, und eines dritten Sumpfstroms, der das mindestens eine Alkyl(meth)acrylat und das mindestens eine weitere Alkyl(meth)acrylat enthält.

Üblicherweise wird der in Schritt h1) erhaltene zweite Kopfstrom kontinuierlich in die Destillation in Schritt h2) überführt.

Der dritte Sumpfstrom, der in Schritt h2) erhalten wird, umfasst den Alkyl(meth)acrylatstrom.

Der in Schritt h) erhaltene Alkyl(meth)acrylatstrom und/oder der in Schritt h2) erhaltene dritte Sumpfstrom kann in zumindest einen der Schritt c), e) und/oder f) zumindest teilweise rückgeführt werden.

Bevorzugt ist daher auch ein Verfahren, bei dem der in Schritt h) erhaltene Alkyl(meth)acrylatstrom in zumindest einen der Schritte c), e) und/oder f) zumindest teilweise rückgeführt wird.

Es ist erfindungsgemäß bevorzugt, dass in Schritt c) der in Schritt b) erhaltene flüssige erste Strom vor oder während Schritt h) mit dem Kondensatstrom gemischt wird. In diesem Falle entspricht der weitere Strom dem Kondensatstrom. Diese Ausführungsform ist besonders vorteilhaft, da dann Schritt h) den optionalen Schritt d) umfassen kann.

Bevorzugt ist daher auch ein Verfahren, bei dem der Schritt h) den Schritt d) umfasst.

Umfasst der Schritt h) den Schritt d), so kann der mindestens eine Alkylester aus dem Mischstrom zusammen mit den Resten des mindestens einen Alkylesters aus dem Kondensatstrom abgetrennt werden.

Ein weiterer Gegenstand der vorliegenden Erfindung ist ein Verfahren zur Herstellung eines Poly(alkyl(meth)acrylats) umfassend die folgende Schritte c1) bis h):
c1) Mischen eines flüssigen ersten Stroms, der mindestens ein Alkyl(meth)acrylat und mindestens einen weiteren Alkylester enthält, wobei der flüssige erste Strom durch thermische Spaltung von mindestens einer Polymerzusammensetzung erhältlich ist, mit einem weiteren Strom, der mindestens ein weiteres Alkyl(meth)acrylat enthält, wobei der weitere Strom Teil eines Poly(alkyl(meth)acrylat)-Herstellverfahrens ist, unter Erhalt eines Mischstroms, der den flüssigen ersten Strom und den weiteren Strom umfasst,
e) teilweise Polymerisation des in Schritt c1) erhaltenen Mischstroms unter Erhalt eines Sirups, der teilweise polymerisiertes mindestens ein Alkyl(meth)acrylat, teilweise polymerisiertes mindestens ein weiteres Alkyl(meth)acrylat und den mindestens einen weiteren Alkylester enthält,
f) Polymerisation des in Schritt e) erhaltenen Sirups in einem Entgasungsextruder unter Erhalt einer Polymermischung, die das Poly(alkyl(meth)acrylat) enthält,
g) Entgasung des in Schritt e) erhaltenen Sirups und/oder der in Schritt f) erhaltenen Polymermischung in dem Entgasungsextruder unter Erhalt eines Kondensatstroms, der das mindestens eine Alkyl(meth)acrylat, das mindestens eine weitere Alkyl(meth)acrylat, deren Oligomere und den mindestens einen weiteren Alkylester enthält,
h) Abtrennung der Reste des mindestens einen weiteren Alkylesters aus dem in Schritt g) erhaltenen Kondensatstroms unter Erhalt eines Alkyl(meth)acrylatstroms, der das mindestens eine Alkyl(meth)acrylat und das mindestens eine weitere Alkyl(meth)acrylat enthält.

In Schritt c1) wird der flüssige erste Strom mit dem weiteren Strom gemischt. Der flüssige erste Strom ist erhältlich durch thermische Spaltung von mindestens einer Polymerzusammensetzung. Für die Polymerzusammensetzung gelten die zuvor beschriebenen Ausführungen und Bevorzugungen.

Bevorzugt ist der flüssige erste Strom daher erhältlich durch die folgenden Schritte a) und b):
a) thermische Spaltung von mindestens einer Polymerzusammensetzung, die mindestens ein Poly(alkyl(meth)acrylat) enthält, unter Erhalt eines ersten Gasstroms, der mindestens ein Alkyl(meth)acrylat und mindestens einen weiteren Alkylester enthält,
b) Kondensation des in Schritt a) erhaltenen ersten Gasstroms unter Erhalt des flüssigen ersten Stroms, der das mindestens eine Alkyl(meth)acrylat und den mindestens einen weiteren Alkylester enthält.

Für die Schritte a) und b) gelten die zuvor beschriebenen Ausführungen und Bevorzugungen entsprechend.

Ebenso gelten für den flüssigen ersten Strom die zuvor beschriebenen Ausführungen und Bevorzugungen entsprechend. Für den Schritt c1) gelten die zuvor für Schritt c) beschriebenen Ausführungen und Bevorzugungen entsprechend.

Für die Schritte e) bis h) gelten die zuvor beschriebenen Ausführungen entsprechend.

In einer bevorzugten Ausführungsform wird zusätzlich der zuvor beschriebene Schritt d) im Anschluss an Schritt c1) und vor Schritt e) durchgeführt.

### Figuren

Figur 1: Verfahren zur Herstellung eines Poly(alkyl(meth)acrylats) gemäß Stand der Technik
Figur 2: Eine erste Ausführungsform des erfindungsgemäßen Verfahrens zur Herstellung eines Poly(alkyl(meth)acrylats)
Figur 3: Eine zweite Ausführungsform des erfindungsgemäßen Verfahrens zur Herstellung eines Poly(alkyl(meth)acrylats

Nachfolgend wird die vorliegende Erfindung anhand von Figuren näher beschrieben, ohne sie jedoch hierauf zu beschränken.

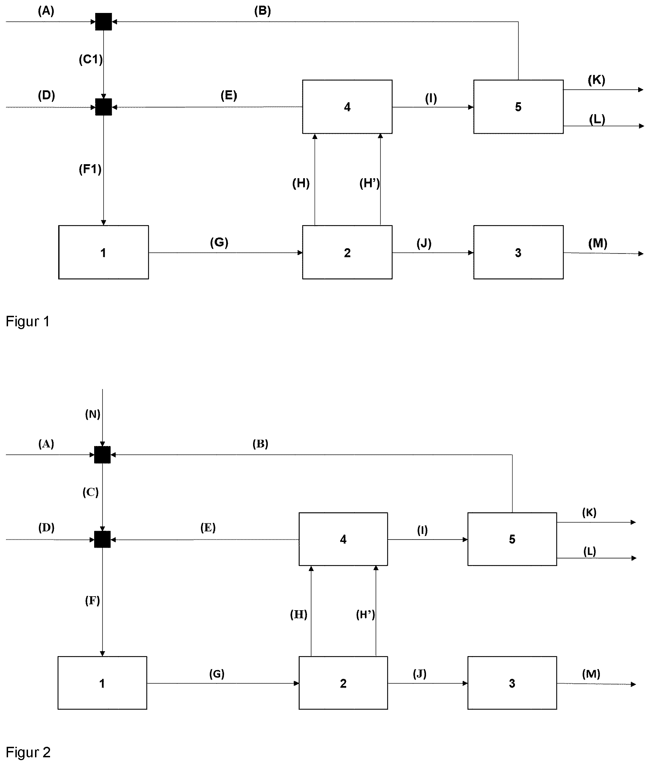

Figur 1 zeigt ein Verfahren zur Herstellung eines Poly(alkyl(meth)acrylats) gemäß Stand der Technik. Ein weiterer Strom (A), der mindestens ein weiteres Alkyl(meth)acrylat enthält, wird mit einem dritten Sumpfstrom (B), der ebenfalls mindestens ein weiteres Alkyl(meth)acrylat enthält, gemischt unter Erhalt eines gemischten Stroms (C1). Der dritte Sumpfstrom (B) ist wie weiter unten beschrieben im Aufreinigungsteil 5 des Verfahrens erhältlich

Der gemischte Strom (C1) wird mit einem Additivstrom (D) und einem Normaldruck-Kondensat (E) gemischt unter Erhalt eines zweiten gemischten Stroms (F1). Dieser zweite gemischte Strom (F1) wird in einen Polymerisationsreaktor 1 überführt. In diesem wird der zweite gemischte Strom (F1) teilweise polymerisiert unter Erhalt eines Sirups (G), der teilweise polymerisiertes mindestens ein weiteres Alkyl(meth)acrylat enthält. Darüber hinaus enthält der Sirup (G) noch nicht polymerisiertes mindestens ein weiteres Alkyl(meth)acrylat. Der Sirup (G) wird anschließend in einen Entgasungsextruder 2 überführt. In diesem wird der Sirup (G) weiter polymerisiert unter Erhalt einer entgasten Polymermischung (J), die das Poly(alkyl(meth)acrylat) umfasst.

Im Entgasungsextruder 2 wird der Sirup (G) und/oder die Polymermischung (J) entgast unter Erhalt eines Kondensatstroms. In der in Figur 1 gezeigten Ausführungsform wird der Sirup (G) und/oder die Polymermsichung (J) zunächst in einem ersten Bereich des Entgasungsextruders 2 bei Umgebungsdruck entgast, unter Erhalt eines ersten Entgasungsstroms (H). Ein weiterer Entgasungsschritt erfolgt in einem zweiten Bereich des Entgasungsextruders 2 bei vermindertem Druck unter Erhalt eines zweiten Entgasungsstroms (H`).

Der erste Entgasungsstrom (H) wird in der Kondensation 4 kondensiert unter Erhalt des Normaldruck-Kondensats (E), das zumindest teilweise mit dem gemischten Strom (C1) gemischt wird. Es ist darüber hinaus möglich, Teile des Normaldruck-Kondensats (E) mit dem Sirup (G) zu mischen (in Figur 1 nicht gezeigt).

Der zweite Entgasungsstrom (H`) wird ebenfalls in der Kondensation 4 kondensiert. Dabei wird das Vakuumentgasungs-Kondensat (I) erhalten. Dieses wird zumindest teilweise in den Aufreinigungsteil 5 überführt. Es ist möglich, Teile des Vakuumentgasungs-Kondensats (I) mit dem Normaldruck-Kondensat (E) zu vermischen (in Figur 1 nicht gezeigt). Das Vakuumentgasungs-Kondensat (I) wird im Aufreinigungsteil 5 aufgereinigt. Der Aufreinigungsteil 5 kann beispielsweise einen Dünnschichtverdampfer und eine Rektifikationskolonne umfassen. Im Dünnschichtverdampfer wird das Vakuumentgasungs-Kondensat (I) teilweise verdampft unter Erhalt eines zweiten Kopfstroms (nicht gezeigt) und eines zweiten Sumpfstroms (L). Der zweite Kopfstrom wird dann in die Rektifikationskolonne überführt und in einen dritten Kopfstrom (K) und den dritten Sumpfstrom (B) überführt.

Die Polymermischung (J) wird in der Polymerverarbeitung 3 zu einem Polymer-Granulat (M) nach bekannten Methoden verarbeitet.

Figur 2 zeigt eine erste Ausführungsform des erfindungsgemäßen Verfahrens zur Herstellung eines Poly(alkyl(meth)acrylats). Gleiche Bezugszeichen wie in Figur 1 haben dieselbe Bedeutung.

Ein weiterer Strom (A), der mindestens ein weiteres Alkyl(meth)acrylat enthält, wird mit einem dritten Sumpfstrom (B), der mindestens ein Alkyl(meth)acrylat und mindestens ein weiteres Alkyl(meth)acrylat enthält, und einem flüssigen ersten Strom (N), der mindestens ein Alkyl(meth)acrylat und mindestens einen weiteren Alkylester enthält, gemischt unter Erhalt eines Mischstroms (C).

Der dritte Sumpfstrom (B) ist, wie weiter unten beschrieben, im Aufreinigungsteil 5 des Verfahrens erhältlich.

Der Mischstrom (C) wird mit einem Additivstrom (D) und einem Normaldruck-Kondensat (E) gemischt unter Erhalt eines zweiten Mischstroms (F). Dieser zweite Mischstrom (F) wird in einen Polymerisationsreaktor 1 überführt. In diesem wird der zweite Mischstrom (F) teilweise polymerisiert unter Erhalt eines Sirups (G), der teilweise polymerisiertes mindestens ein Alkyl(meth)acrylat, teilweise polymerisiertes mindestens ein weiteres Alkyl(meth)acrylat und den mindestens einen weiteren Alkylester enthält. Der Sirup (G) enthält außerdem nicht polymerisiertes mindestens ein Alkyl(meth)acrylat und nicht polymerisiertes mindestens ein weiteres Alkyl(meth)acrylat. Der Sirup (G) wird anschließend in einen Entgasungsextruder 2 überführt. In diesem wird der Sirup (G) weiter polymerisiert unter Erhalt einer entgasten Polymermischung (J), die das Poly(alkyl(meth)acrylat) umfasst.

Im Entgasungsextruder 2 wird der Sirup (G) und/oder die Polymermischung (J) wie vorstehend für Figur 1 beschrieben entgast und der erhaltene erste Entgasungsstrom (H) und der zweite Entgasungsstrom (H`) in der Kondensation 4 kondensiert. Das so erhaltene Vakuumentgasungs-Kondensat (I) wird wie für Figur 1 beschrieben aufgereinigt und der erhaltene dritte Sumpfstrom (B) rezykliert.

Die Polymermischung (J) wird in der Polymerverarbeitung 3 zu einem Polymer-Granulat (M) nach bekannten Methoden verarbeitet.

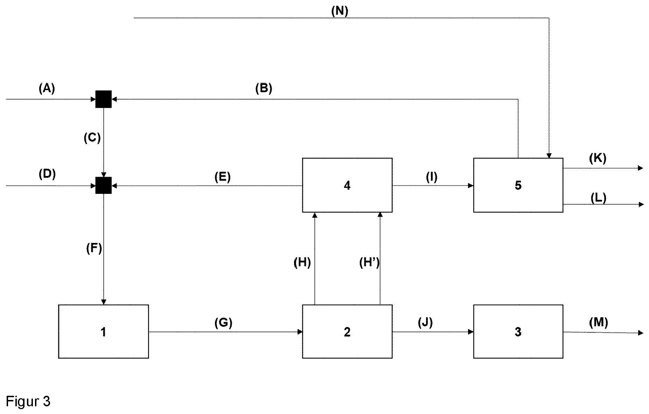

Figur 3 zeigt eine weitere Ausführungsform des erfindungsgemäßen Verfahrens. Gleiche Bezugszeichen in Figur 3 wie in Figur 2 haben dieselbe Bedeutung. Nachfolgend werden nur die Unterschiede zum gemäß Figur 2 näher beschrieben.

Der flüssige erste Strom (N), der das mindestens eine Alkyl(meth)acrylat und den mindestens einen weiteren Alkylester enthält, wird direkt dem Aufarbeitungsteil 5 zugeführt und zusammen mit dem Vakuumentgasungs-Kondensat (I) beispielsweise über einen Dünnschichtkondensator und eine Rektifikationskolonne aufgereinigt unter Erhalt des dritten Sumpfstroms (B), der dann mit dem weiteren Strom (A) gemischt wird. In dieser Ausführungsform wird also der flüssige erste Strom (N) mit dem Vakuumentgasungs-Kondensat (I), das unter anderem das mindestens eine weitere Alkyl(meth)acrylat enthält und Teil des Poly(alkyl(meth)acrylat)-Herstellverfahrens ist, gemischt, sodass in dieser Ausführungsform das Vakuumentgasungs-Kondensat (I) ein weiterer Strom gemäß Schritt c) des erfindungsgemäßen Verfahrens ist.

Der dritte Sumpfstrom (B) wird dann wie für Figur 2 beschrieben mit dem weiteren Strom (A) gemischt unter Erhalt des Mischstroms. Die weiteren Verfahrensschritte sind in Figur 3 analog zu den in Figur 1 beschriebenen.

### Bezugszeichenliste

- (A): weiterer Strom
- (B): dritter Sumpfstrom
- (C): Mischstrom
- (C1): gemischter Strom
- (D): Additivstrom
- (E): Normaldruck-Kondensat
- (F): zweiter Mischstrom
- (F1): zweiter gemischter Strom
- (G): Sirup
- (H): erster Entgasungsstrom
- (H`): zweiter Entgasungsstrom
- (I): Vakuumentgasungs-Kondensat
- (J): entgaste Polymermischung
- (K): dritter Kopfstrom
- (L): zweiter Sumpfstrom
- (M): Polymer-Granulat
- (N): flüssiger erster Strom

- 1: Polymerisationsreaktor
- 2: Entgasungsextruder
- 3: Polymerverarbeitung
- 4: Kondensation
- 5: Aufreinigungsteil

Nachfolgend wird die vorliegende Erfindung anhand von Beispielen näher beschrieben, ohne sie jedoch hierauf zu beschränken.

### Beispiele

### Herstellung von Polymethylmethacrylat (PMMA) in einer zweistufigen Polymerisation ausgehend von verschiedenen Monomerzusammensetzungen

Ein weiterer Strom wurde durch ein Cs-Herstellungsverfahren für MMA bereitgestellt. Tabelle 1 gibt die Zusammensetzung des erhaltenen weiteren Stroms an.

**Tabelle 1**

| **Strom** | **Stoff** | **Konzentration** | **Einheit** |
|---|---|---|---|
| (A) | Methylmethacrylat (MMA) | >99,98 | Gew.-% |
| (A) | Methylacrylat | 3 | Gew.-ppm |
| (A) | Diacetyl | 1 | Gew.-ppm |
| (A) | dimeres MMA (DMMA) | 2 | Gew.-ppm |
| (A) | Methylpropionat | 100 | Gew.-ppm |
| (A) | Methylisobutyrat | 50 | Gew.-ppm |
| (A) | Wasser | 20 | Gew.-ppm |
| (A) | Summe Unbekannte | 20 | Gew.-ppm |

Zwei verschiedene flüssige erste Ströme wurden durch Depolymerisation von Poyl(methylmethacrylat) erhalten. Die Zusammensetzung des jeweils erhaltenen flüssigen ersten Stroms ist in den Tabellen 2 und 3 angegeben.

**Tabelle 2**

| **Strom** | **Stoff** | **Konzentration** | **Einheit** |
|---|---|---|---|
| (N) | MMA | 97,9 | Gew.-% |
| (N) | Aceton | 100 | Gew.-ppm |
| (N) | Methanol | 120 | Gew.-ppm |
| (N) | Methylacrylat | 5000 | Gew.-ppm |
| (N) | Methylpropionat | 1000 | Gew.-ppm |
| (N) | Methylisobutyrat | 5000 | Gew.-ppm |
| (N) | Diacetyl | 50 | Gew.-ppm |
| (N) | DMMA | 2000 | Gew.-ppm |
| (N) | Methylpyruvat | 15 | Gew.-ppm |
| (N) | Summe Leichtsieder | 8000 | Gew.-ppm |
| (N) | Summe Schwersieder | 4900 | Gew.-ppm |

**Tabelle 3**

| **Strom** | **Stoff** | **Konzentration** | **Einheit** |
|---|---|---|---|
| (N) | MMA | 91,2 | Gew.-% |
| (N) | Aceton | 110 | Gew.-ppm |
| (N) | Methanol | 90 | Gew.-ppm |
| (N) | Methylacrylat | 9820 | Gew.-ppm |
| (N) | Methylpropionat | 2000 | Gew.-ppm |
| (N) | Methylisobutyrat | 4940 | Gew.-ppm |
| (N) | Diacetyl | 26 | Gew.-ppm |
| (N) | DMMA | 9000 | Gew.-ppm |
| (N) | Methylpyruvat | 15 | Gew.-ppm |
| (N) | Summe Leichtsieder | 11980 | Gew.-ppm |
| (N) | Summe Schwersieder | 54800 | Gew.-ppm |

### Messmethoden:

Die in Tabellen 1, 2 und 3 angegebenen Zusammensetzungen wurden mittels Gaschromatographie (Agilent 88990, Standardaddition: Isopropanol) bestimmt.

Die Qualität und Stoffeigenschaften der gemäß den Beispielen hergestellten Polymethylmethacrylat (PMMA) Produkte wurde nach folgenden Methoden bestimmt: Die Gelbfärbung (D65/10°) wurde anhand von Photometrie (Varian Cary 5000) nach DIN 6167 (1980; 01) bestimmt. Die Schmelze-Volumenflussrate (MVR) wurde nach DIN EN ISO 1133 (2012; 03) bei 230 °C und mit 3,8 kg Probe bestimmt. Die Vicat-Erweichungstemperatur (VST) wurde per DIN EN ISO 306 (2014; 03) bestimmt.

### Vergleichsbeispiel V1: Herstellung von PMMA ausgehend von einem weiteren Strom

PMMA wurde in einer Anlage gemäß Figur 1 hergestellt.

5000 kg/h weiterer Strom (A) gemäß Tabelle 1 wurden kontinuierlich bei 8 °C mit 384 kg/h eines dritten Sumpfstroms (B) in einem statischen Mischer gemischt. Der dritte Sumpfstrom (B) wies eine MMA-Konzentration von 98,8 % auf, bezogen auf die Gesamtmenge an drittem Sumpfstrom (B). Der dritte Sumpfstrom (B) wurde aus dem weiter unten beschriebenen Aufreinigungsteil 5 rezykliert und wies eine Temperatur von 10 °C auf. Der Aufreinigungsteil 5 umfasst einen Dünnschichtverdampfer, gekoppelt mit einer Rektifikationskolonne.

Durch Mischen des weiteren Stroms (A) mit dem dritten Sumpfstrom (B) wurde ein gemischter Strom (C1) erhalten, der den weiteren Strom (A) und den dritten Sumpfstrom (B) umfasst. Der gemischte Strom (C1) wurde mit einem 100 kg/h eines Additivstroms (D) gemischt. Der Additivstrom (D) enthielt Palmitin als Trennmittel, Hochsieder als Zuschlagsstoffe sowie Polymerisationsregler wie Dodecylmercaptan gelöst in MMA. Die MMA-Konzentration betrug > 90 Gew.-%. Zusätzlich wurde ein Normaldruck-Kondensat (E) zugefügt, welches etwa 90 % MMA enthielt und eine Temperatur von 5 °C aufwies. Das Normaldruck-Kondensat (E) wurde in der weiter unten beschriebenen Kondensation 4 erhalten.

Der beim Mischen erhaltene zweite gemischte Strom (F1), welcher 18200 kg/h betrug, wurde anschließend in einem Rohrbündelwärmeüberträger auf 150 °C erwärmt und einem Polymerisationsreaktor 1 mit einem Volumen von 10 m³ zur teilweisen Polymerisation zugeführt. Durch Zugabe von 5 kg/h Initiatorlösung (in Figur 1 nicht gezeigt) wurde der zweite gemischte Strom (F1) anschließend kontinuierlich bei 150 °C und leichtem Überdruck polymerisiert, wobei ein Umsatzgrad von ca. 45 % eingestellt wurde. Die Verweilzeit betrug ca. 10 min.

Der erhaltene Sirup (G) wurde anschließend in einem Rohrbündelwärmeüberträger auf ca. 210 °C rohrseitig vorgewärmt und als Strom mit ca. 12800 kg/h in den Entgasungsextruder 2 gefahren. Dieser wurde mir einem Temperaturprofil von 170 °C bis 270 °C betrieben und an zwei Stellen entgast. Die erste Entgasung unter Erhalt eines ersten Entgasungsstroms (H) fand bei Umgebungsdruck im ersten Drittel des Entgasungsextruders 2 statt, die zweite Entgasung unter Erhalt eines zweiten Entgasungsstroms (H`) fand im Vakuum bei ca. 150 mbara statt.

Der bei Normaldruck erhaltene erste Entgasungsstrom (H) wurde bei 5 °C kondensiert und als Normaldruck-Kondensat (E) eingesetzt. Etwa 5 % des Normaldruck-Kondensats (E) wurden mit dem Vakuumentgasungs-Kondensat (I) gemischt (in Figur 1 nicht gezeigt) bevor dieses dem Aufreinigungsteil 5 zugeführt wurde.

509 kg/h des Vakuumentgasungs-Kondensats (I) wurden dem Aufreinigungsteil 5 zugeführt. Dieses umfasste einen Dünnschichtverdampfer DN500 gekoppelt mit einer Rektifikationskolonne DN400. Der Dünnschichtverdampfer wurde bei 190 mbara und 75 °C betrieben und wies eine spezielle Wischerkonstruktion (Typ DVB Fa. SMS Buss) auf. Eingesetzt wurden federbelastete PTFE Wischerblätter, welche wenig Friktion und damit lokale Erwärmung verursachen. Beheizt wurde der Apparat mit 1 barg Sattdampf auf der Mantelseite, welche eine Austauschfläche von 4 m² bereitstellte. Das Vakuumentgasungs-Kondensat (I) wurde vor Zuführung in die thermische Aufarbeitung mit einem Stabilisatorgemisch enthaltend 2,4-Dimethyl-6-tert-butylphenol (Topanol A) und 1,6-Ditert.-butyl-4-methylphenol (Topanol O) gelöst in MMA versetzt. Die Konzentration betrug ca. 200 ppm. Das stabilisierte, kalte Vakuumentgasungs-Kondensat (I) wurde partiell verdampft, sodass ein zweiter Kopfstrom und ein zweiter Sumpfstrom (L) erhalten wurden. 98 kg/h des zweiten Sumpfstroms (L), der noch etwa 25 % MMA enthielt, wurde aus dem Verfahren ausgeschleust. Der Dünnschichtverdampfer wurde kontinuierlich mit 0,5 Nm³/h Luft beaufschlagt, um die Wirkung des Stabilisatorgemischs zu unterstützen.

Der erhaltene zweite Kopfstrom wurde anschließend einer Rektifikationskolonne, welche mit 6 m strukturierter Packung (Typ MP452Y) mittig ausgestattet war, zugeführt. Die Rektifikationskolonne wurde bei 180 mbara, 55 °C im Sumpf, sowie 29 °C am Kopf betrieben. Das Vakuum wurde mit einer Flüssigkeitsring-Vakuumpumpe erzeugt, welche mit weiterem Strom (A) aus dem PMMA-Prozess als Arbeitsflüssigkeit betrieben wurde (in Figur 1 nicht gezeigt). Der Energieeintrag in die Rektifikationskolonne erfolgte über einen mit 1 barg Sattdampfbeheizten Naturumlaufverdampfer mit geringer Verweilzeit. Der Verdampfer wurde ebenfalls kontinuierlich mit 0,5 Nm³/h Luft beaufschlagt, um die Wirkung des Stabilisators zu unterstützen. Die Kondensation am Kopf erfolgte in zwei Rohrbündelwärmeüberträgern, welche mit Kühlwasser (20 °C) und Sole (2 °C) betrieben wurden. bei einem Rücklaufverhältnis von 0,95 wurde am Kopf der Kolonne der dritte Kopfstrom (K) kontinuierlich aus dem Prozess entfernt. Der dritte Sumpfstrom (B) wurde wie zuvor beschrieben mit dem weiteren Strom (A) gemischt.

Die im Entgasungsextruder 2 erhaltene entgaste Polymermischung (J) umfasst im Wesentlichen PMMA. Dieses wurde als Flächenmaterial-Endlosstrang entnommen, in einem Wasserbad erstarrt und in Polymer-Granulat (M), im Wesentlichen bestehend aus PMMA, verarbeitet. Der Massestrom des Polymer-Granulats (M) betrug etwa 4975 kg/h.

Für das so erhaltene Polymer-Granulat (M) wurden Qualität und Stoffeigenschaften wie vorstehend beschrieben bestimmt. Die Ergebnisse sind in Tabelle 4 zu finden.

### Erfindungsgemäßes Beispiel B1: Herstellung von PMMA ausgehend von einem flüssigen ersten Strom und einem weiteren Strom

PMMA wurde in einer Anlage gemäß Figur 2 hergestellt.

Die Herstellung erfolgte im Wesentlichen analog zu der in Vergleichsbeispiel V1 beschriebenen Herstellung. Gleiche Bezugszeichen in den Figuren haben daher dieselbe Bedeutung. Nachfolgend werden daher im Wesentlichen die Änderungen im Verfahren gegenüber dem Verfahren gemäß Vergleichsbeispiel V1 beschrieben.

5000 kg/h weiterer Strom (A) gemäß Tabelle 1 wurden kontinuierlich bei 8 °C mit 640 kg/h flüssigem ersten Strom (N) gemäß Tabelle 2 und 385 kg/h eines dritten Sumpfstroms (B) in einem statischen Mischer gemischt unter Erhalt eines Mischstroms (C). Der dritte Sumpfstrom (B) wies eine MMA-Konzentration von 97,3 % auf, bezogen auf die Gesamtmenge an drittem Sumpfstrom (B). Der dritte Sumpfstrom (B) wurde wie in Vergleichsbeispiel V1 beschrieben durch Rezyklierung erhalten. Das Mischungsverhältnis von flüssigem ersten Strom (N) zu weiterem Strom (A) ist in Tabelle 4 angegeben.

Dem Mischstrom (C) wurde ein Additivstrom (D) und ein Strom eines Normaldruck-Kondensats (E), welcher 14390 kg/h betrug, zugeführt unter Erhalt eines zweiten Mischstroms (F), der ca. 20400 kg/h betrug. Die im zweiten Mischstrom (F) enthaltenen Nebenprodukte sind in Tabelle 4 gelistet. Der zweite Mischstrom wurde anschließend einem Polymerisationsreaktor 1 zugeführt und analog zu Vergleichsbeispiel V1 weiter verarbeitet.

Die für das erhaltene Polymer-Granulat (M) wurden Qualität und Stoffeigenschaften wie vorstehend beschrieben bestimmt. Die Ergebnisse sind in Tabelle 4 zu finden.

### Erfindungsgemäßes Beispiel B2: Herstellung von PMMA ausgehend von einem flüssigen ersten Strom und einem weiteren Strom

PMMA wurde in einer Anlage gemäß Figur 2 hergestellt.

Die Herstellung erfolgte im Wesentlichen analog zu der in erfindungsgemäßem Beispiel B1 beschriebenen Herstellung. Nachfolgend werden daher im Wesentlichen die Änderungen im Verfahren gemäß erfindungsgemäßem Beispiel B1 beschrieben.

5000 kg/h weiterer Strom (A) gemäß Tabelle 1 wurden kontinuierlich bei 8 °C mit 160 kg/h flüssigem ersten Strom (N) gemäß Tabelle 2 und 391 kg/h eines dritten Sumpfstroms (B) in einem statischen Mischer gemischt unter Erhalt eines Mischstroms (C). Der dritte Sumpfstrom (B) wies eine MMA-Konzentration von 97,2 % auf, bezogen auf die Gesamtmenge an drittem Sumpfstrom (B). Der dritte Sumpfstrom (B) wurde wie in Vergleichsbeispiel V1 beschrieben durch Rezyklierung erhalten. Das Mischungsverhältnis von flüssigem ersten Strom (N) zu weiterem Strom (A) ist in Tabelle 4 angegeben.

Dem Mischstrom (C) wurde ein Additivstrom (D) und ein Strom eines Normaldruck-Kondensats (E), welcher 13180 kg/h betrug, zugeführt unter Erhalt eines zweiten Mischstroms (F), der ca. 18840 kg/h betrug. Die im zweiten Mischstrom (F) enthaltenen Nebenprodukte sind in Tabelle 4 gelistet. Der zweite Mischstrom wurde anschließend einem Polymerisationsreaktor 1 zugeführt und analog zu Vergleichsbeispiel V1 weiter verarbeitet.

Für das erhaltene Polymer-Granulat (M) wurden Qualität und Stoffeigenschaften wie vorstehend beschrieben bestimmt. Die Ergebnisse sind in Tabelle 4 zu finden.

### Erfindungsgemäßes Beispiel B3: Herstellung von PMMA ausgehend von einem aufgereinigten flüssigen ersten Strom und einem weiteren Strom

PMMA wurde in einer Anlage gemäß Figur 3 hergestellt.

Die Herstellung erfolgte im Wesentlichen analog zu der in Vergleichsbeispiel V1 beschriebenen Herstellung. Gleiche Bezugszeichen in den Figuren haben daher dieselbe Bedeutung. Nachfolgend werden daher im Wesentlichen die Änderungen im Verfahren gegenüber dem Verfahren gemäß Vergleichsbeispiel V1 beschrieben.

5000 kg/h weiterer Strom (A) gemäß Tabelle 1 wurden kontinuierlich bei 8 °C mit 1575 kg/h eines dritten Sumpfstroms (B) in einem statischen Mischer gemischt unter Erhalt eines Mischstroms (C). Der dritte Sumpfstrom (B) wies eine MMA-Konzentration von 98,6 % auf. Der dritte Sumpfstrom (B) wurde durch Rezyklierung erhalten. Im Aufreinigungsteil 5 wurde dem Vakuumentgasungs-Kondensat (I) flüssiger erster Strom (N) gemäß Tabelle 2 zugemischt und die beiden Ströme gemeinsam wie weiter unten beschrieben aufgereinigt unter Erhalt des dritten Sumpfstroms (B).

Dem Mischstrom (C) wurde dann Additivstrom (D) und ein Strom eines Normaldruck-Kondensats (E), welcher 15570 kg/h betrug, wie in Vergleichsbeispiel V1 beschrieben zugemischt unter Erhalt eines zweiten Mischstroms (F), der ca. 22240 kg/h betrug. Die im zweiten Mischstrom (F) enthaltenen Nebenprodukte sind in Tabelle 4 gelistet. Der zweite Mischstrom (F) wurde anschließend einem Polymerisationsreaktor 1 zugeführt und analog Vergleichsbeispiel V1 weiter verarbeitet.

532 kg/h des Vakuumentgasungs-Kondensats (I) wurden mit dem flüssigen ersten Strom (N) gemäß Tabelle 2 im Aufreinigungsteil 5 wie in Vergleichsbeispiel V1 beschrieben gemischt und aufgereinigt. Das Rücklaufverhältnis der Rektifikationskolonne lag bei 1,5. Der erhaltene dritte Sumpfstrom (B) wurde wie vorstehend beschrieben mit dem weiteren Strom (A) gemischt.

Für das erhaltene Polymer-Granulat (M) wurden Qualität und Stoffeigenschaften wie vorstehend beschrieben bestimmt. Die Ergebnisse sind in Tabelle 4 zu finden.

### Erfindungsgemäßes Beispiel B4: Herstellung von PMMA ausgehend von einem aufgereinigten flüssigen ersten Strom und einem weiteren Strom

PMMA wurde in einer Anlage gemäß Figur 3 hergestellt.

Die Herstellung erfolgte im Wesentlichen analog zu der in erfindungsgemäßem Beispiel B3 beschriebenen Herstellung. Nachfolgend werden daher im Wesentlichen die Änderungen im Verfahren gemäß erfindungsgemäßem Beispiel B3 beschrieben.

5000 kg/h weiterer Strom (A) gemäß Tabelle 1 wurde kontinuierlich bei 8 °C mit 723 kg/h eines dritten Sumpfstroms (B) in einem statischen Mischer gemischt unter Erhalt eines Mischstroms (C). Der dritte Sumpfstrom (B) wies eine MMA-Konzentration von 97,3 % auf. Der dritte Sumpfstrom (B) wurde durch Rezyklierung erhalten. Im Aufreinigungsteil 5 wurde dem Vakuumentgasungs-Kondensat (I) flüssiger erster Strom (N) gemäß Tabelle 3 zugemischt und die beiden Ströme wie weiter unten beschrieben aufgereinigt unter Erhalt des dritten Sumpfstroms (B).

Dem Mischstrom (C) wurde dann Additivstrom (D) und ein Strom eines Normaldruck-Kondensats (E), welcher 13580 kg/h betrug, wie in Vergleichsbeispiel V1 beschrieben zugemischt unter Erhalt eines zweiten Mischstroms (F), der ca. 19400 kg/h betrug. Die im zweiten Mischstrom (F) enthaltenen Nebenprodukte sind in Tabelle 4 gelistet. Der zweite Mischstrom (F) wurde anschließend einem Polymerisationsreaktor 1 zugeführt und analog Vergleichsbeispiel V1 weiterverarbeitet.

530 kg/h des Vakuumentgasungs-Kondensats (I) wurden mit dem flüssigen ersten Strom (N) gemäß Tabelle 3 im Aufreinigungsteil 5 wie in erfindungsgemäßem Beispiel B3 beschrieben, gemischt und aufgereinigt.

Für das erhaltene Polymer-Granulat (M) wurden Qualität und Stoffeigenschaften wie vorstehend beschrieben bestimmt. Die Ergebnisse sind in Tabelle 4 zu finden.

### Erfindungsgemäßes Beispiel B5: Herstellung von PMMA ausgehend von einem aufgereinigten flüssigen ersten Strom und einem weiteren Strom

PMMA wurde in einer Anlage gemäß Figur 3 hergestellt.

Die Herstellung erfolgte im Wesentlichen analog zu der in erfindungsgemäßem Beispiel B3 beschriebenen Herstellung. Nachfolgend werden daher im Wesentlichen die Änderungen im Verfahren gemäß erfindungsgemäßem Beispiel B3 beschrieben.

5000 kg/h weiterer Strom (A) gemäß Tabelle 1 wurden kontinuierlich bei 8 °C mit 2360 kg/h eines dritten Sumpfstroms (B) in einem statischen Mischer gemischt unter Erhalt eines Mischstroms (C). Der dritte Sumpfstrom (B) wies eine MMA-Konzentration von 96,4 % auf. Der dritte Sumpfstrom (B) wurde durch Rezyklierung erhalten. Im Aufreinigungsteil 5 wurde dem Vakuumentgasungs-Kondensat (I) flüssiger erster Strom (N) gemäß Tabelle 3 zugemischt und die beiden Ströme wie weiter unten beschrieben aufgereinigt unter Erhalt des dritten Sumpfstroms (B).

Dem Mischstrom (C) wurde dann Additivstrom (D) und ein Strom eines Normaldruck-Kondensats (E), welcher ca. 17400 kg/h betrug, wie in Vergleichsbeispiel V1 beschrieben zugemischt unter Erhalt eines zweiten Mischstroms (F), der ca. 24860 kg/h betrug. Die im zweiten Mischstrom (F) enthaltenen Nebenprodukte sind in Tabelle 4 gelistet. Der zweite Mischstrom (F) wurde anschließend einem Polymerisationsreaktor 1 zugeführt und analog Vergleichsbeispiel V1 weiterverarbeitet.

535 kg/h des Vakuumentgasungs-Kondensats (I) wurden mit dem flüssigen ersten Strom (N) gemäß Tabelle 3 im Aufreinigungsteil 5 wie in erfindungsgemäßem Beispiel B3 beschrieben, gemischt und aufgereinigt.

Für das erhaltene Polymer-Granulat (M) wurden Qualität und Stoffeigenschaften wie vorstehend beschrieben bestimmt. Die Ergebnisse sind in Tabelle 4 zu finden.

**Tabelle 4**

| Strom | Beschreibung | Einheit | V1 | B1 | B2 | B3 | B4 | B5 |
|---|---|---|---|---|---|---|---|---|
| (A) | Rein-MMA Zulaufstrom (Qualität: vgl. Tabelle1) | kg/h | 5000 | 5000 | 5000 | 5000 | 5000 | 5000 |
| (D) | Additivstrom (>90 Gew.-% MMA) | kg/h | 100 | 100 | 100 | 100 | 100 | 100 |
| (N) | MMA-Gehalt Recycle-Material | Gew.-% | - | 97,9 | 91,2 | 97,9 | 91,2 | 91,2 |
| (N) | Recycle-MMA in Reaktor | kg/h | - | 640 | 160 | - | - | - |
| (N) | Recycle-MMA in Aufreinigung | kg/h | - | - | - | 1210 | 370 | 2120 |
| (N) / (A) | Verhältnis Recycle-MMA zu frischem MMA | % | - | 12,8 | 3,2 | 24,2 | 7,4 | 42,4 |
| (N) / (M) | Einsatzfaktor Recycle MMA bezogen auf PMMA Produkt | % | - | 11,4 | 3,1 | 19,7 | 7,0 | 30,6 |
| | Monomerverlust im Strom (K und L) | kg/h | 25 | 40 | 65 | 39 | 45 | 51 |
| (M) | Ausbeute PMMA | Gew.-% | 97,8 | 97,4 | 97,0 | 97,3 | 96,7 | 95,9 |
| (K) | Leichtsiederaustrag | % von (M) | 0,5 | 0,6 | 0,7 | 0,8 | 0,9 | 1,2 |
| (L) | Schwersiederaustrag | % von (M) | 1,9 | 2,0 | 2,4 | 1,9 | 2,5 | 3,1 |
| (L) | Oligomer- / Polymeranteil | Gew.-% | 11 | 18 | 23 | 17 | 24 | 41 |
| (F) | Aceton | Gew.-ppm | 120 | 230 | 290 | 80 | 120 | 240 |
| (F) | Methanol | Gew.-ppm | 30 | 195 | 260 | 140 | 160 | 220 |
| (F) | Diacetyl | Gew.-ppm | 19 | 24 | 31 | 17 | 23 | 48 |
| (F) | Methylacrylat | Gew.-ppm | 3900 | 9840 | 11020 | 4200 | 4600 | 5030 |
| (F) | Methylpyruvat | Gew.-ppm | 650 | 720 | 790 | 690 | 740 | 1370 |
| (F) | Methylpropionat | Gew.-ppm | 1680 | 2210 | 2420 | 1890 | 2060 | 2720 |
| (F) | Methylisobutyrat | Gew.-ppm | 4250 | 5370 | 6540 | 4430 | 4730 | 7540 |
| (F) | Unbekannte | Gew.-% | 1,7 | 2,4 | 2,7 | 1,9 | 2,0 | 3,1 |
| | | | | | | | | |
| (M) | PMMA Qualität ausreichend für glasklares Produkt | | Ja | Ja | Nein | Ja | Ja | Nein |
| (M) | PMMA Qualität ausreichend für eingefärbtes Produkt | | Ja | Ja | Ja | Ja | Ja | Ja |
| (M) | Anteil Fremdpolymere (PA, PAN, POM etc.) | Gew.-ppm | 250 | 1420 | 3160 | 640 | 780 | 960 |
| (M) | Transmission (450 nm) | Gew.-% | 93,5 | 92,8 | 92,4 | 93,2 | 93,1 | 90,2 |
| (M) | Gelbwert (Y.I.) 148 mm | | 1,1 | 2,0 | 10,4 | 1,2 | 2,2 | 29 |
| (M) | Schmelze - Volumenflussrate MVR | ml/10min | 2,7 | 2,6 | 2,2 | 2,7 | 2,7 | 2,2 |
| (M) | Vicat Erweichungstemp. VST | °C | 107,5 | 106,5 | 105,5 | 107 | 107 | 105 |

Anhand der in Tabelle 4 gezeigten Ergebnisse ist zu erkennen, dass die Herstellung von PMMA ausgehend von Rein-MMA in Kombination mit Recycle MMA möglich ist. Erfindungsgemäß hergestelltes PMMA weist eine für die Anwendung ausreichende Transmission und einen ausreichend niedrigen Gelbwert auf, um zumindest eingefärbte Produkte herzustellen. Die Schmelze-Volumenflussrate ist ausreichend bei gleichzeitig hoher Vicat Erweichungstemperatur. Somit können durch das erfindungsgemäße Verfahren Ressourcen eingespart und MMA rezykliert werden bei gleich guter Produktqualität.

PMMA, das auch als glasklares PMMA verwendet werden kann, wird erhalten wenn entweder das eingesetzte Recycle MMA bereits eine hohe Reinheit aufweist (Beispiel B1 und B3) und/oder zusammen mit dem Vakuumentgasungs-Kondensat aufgereinigt wird bevor es mit dem Rein-MMA gemischt wird (Beispiel B3, B4 und B5). Letzteres erlaubt auch die Verwendung größerer Mengen Recycle MMA, selbst wenn dies eine niedrigere Reinheit aufweist.

## Patentansprüche

1. Verfahren zur Herstellung eines Poly(alkyl(meth)acrylats) umfassend die folgenden Schritte a) bis h)
a) thermische Spaltung von mindestens einer Polymerzusammensetzung, die mindestens ein Poly(alkyl(meth)acrylat) enthält, unter Erhalt eines ersten Gasstroms, der mindestens ein Alkyl(meth)acrylat und mindestens einen weiteren Alkylester enthält,
b) Kondensation des in Schritt a) erhaltenen ersten Gasstroms unter Erhalt eines flüssigen ersten Stroms, der das mindestens eine Alkyl(meth)acrylat und den mindestens einen weiteren Alkylester enthält,
c) Mischen des in Schritt b) erhaltenen flüssigen ersten Stroms mit einem weiteren Strom, der mindestens ein weiteres Alkyl(meth)acrylat enthält, wobei der weitere Strom Teil eines Poly(alkyl(meth)acrylat)-Herstellverfahrens ist, unter Erhalt eines Mischstroms, der den flüssigen ersten Strom und den weiteren Strom umfasst,
e) teilweise Polymerisation des in Schritt c) erhaltenen Mischstroms unter Erhalt eines Sirups, der teilweise polymerisiertes mindestens ein Alkyl(meth)acrylat, teilweise polymerisiertes mindestens ein weiteres Alkyl(meth)acrylat und den mindestens einen weiteren Alkylester enthält,
f) Polymerisation des in Schritt e) erhaltenen Sirups in einem Entgasungsextruder unter Erhalt einer Polymermischung, die das Poly(alkyl(meth)acrylat) enthält,
g) Entgasung des in Schritt e) erhaltenen Sirups und/oder der in Schritt f) erhaltenen Polymermischung in dem Entgasungsextruder unter Erhalt eines Kondensatstroms, der das mindestens eine Alkyl(meth)acrylat, das mindestens eine weitere Alkyl(meth)acrylat, deren Oligomere und den mindestens einen weiteren Alkylester enthält,
h) Abtrennung des mindestens einen weiteren Alkylesters aus dem in Schritt g) erhaltenen Kondensatstrom unter Erhalt eines Alkyl(meth)acrylatstroms, der das mindestens eine Alkyl(meth)acrylat und das mindestens eine weitere Alkyl(meth)acrylat enthält.

2. Verfahren gemäß Anspruch 1, **dadurch gekennzeichnet, dass** das Verfahren zusätzlich den folgenden Schritt d) umfasst
d) zumindest teilweises Abtrennen des mindestens einen weiteren Alkylesters aus dem in Schritt c) erhaltenen Mischstrom unter Erhalt eines aufgereinigten Mischstroms, der das mindestens eine Alkyl(meth)acrylat, das mindestens eine weitere Alkyl(meth)acrylat und Reste des mindestens einen weiteren Alkylesters enthält,
wobei dann in Schritt e) der in Schritt d) erhaltene aufgereinigte Mischstrom teilweise polymerisiert wird.

3. Verfahren gemäß Anspruch 1 oder 2, **dadurch gekennzeichnet, dass** das in dem ersten Gasstrom in Schritt a) enthaltene mindestens eine Alkyl(meth)acrylat ausgewählt ist aus der Gruppe bestehend aus C₁- bis C₄-Alkyl(meth)acrylaten.

4. Verfahren gemäß einem der Ansprüche 1 bis 3, **dadurch gekennzeichnet, dass** der mindestens eine weitere Alkylester ausgewählt ist aus der Gruppe bestehend aus Methylpropionat, Methylisobutyrat, Methylpivalat, Methyl-3-methoxyisobutyrat und Dicarbonsäurediestern.

5. Verfahren gemäß einem der Ansprüche 1 bis 4, **dadurch gekennzeichnet, dass** der erste Gasstrom mindestens eine weitere Komponente, ausgewählt aus der Gruppe bestehend aus Styrol, (Meth)acrylsäure, schwefelhaltigen Verbindungen, Oligomeren und Dimeren, enthält.

6. Verfahren gemäß einem der Ansprüche 1 bis 5, **dadurch gekennzeichnet, dass** der erste Gasstrom nach Schritt a) und vor Schritt b) destilliert wird unter Erhalt eines ersten Kopfstroms, der das mindestens eine Alkyl(meth)acrylat und den mindestens einen weiteren Alkylester enthält, und eines ersten Sumpfstroms, der mindestens eine von dem mindestens einen Alkyl(meth)acrylat und dem mindestens einen weiteren Alkylester verschiedene Komponente enthält, wobei der erste Kopfstrom in Schritt b) kondensiert wird.

7. Verfahren gemäß einem der Ansprüche 1 bis 6, **dadurch gekennzeichnet, dass** in Schritt c) bis zu 50 Gew.-% des flüssigen ersten Stroms mit dem weiteren Strom gemischt werden, bezogen auf das Gesamtgewicht des erhaltenen Mischstroms.

8. Verfahren gemäß einem der Ansprüche 1 bis 7, **dadurch gekennzeichnet, dass** der flüssige erste Strom im Bereich von 90 bis < 99,8 Gew.-% des Alkyl(meth)acrylats enthält, bezogen auf das Gesamtgewicht des flüssigen ersten Stroms, und dass 1,5 bis 50 Gew.-% des flüssigen ersten Stroms mit dem weiteren Strom gemischt werden, bezogen auf das Gesamtgewicht des erhaltenen Mischstroms.

9. Verfahren gemäß Anspruch 8, **dadurch gekennzeichnet, dass** der mindestens ein Hilfsstoff ausgewählt ist aus der Gruppe bestehend aus Initiatoren, Reglern und Trennmitteln.

10. Verfahren gemäß einem der Ansprüche 1 bis 9, **dadurch gekennzeichnet, dass** bei der teilweisen Polymerisation in Schritt e) der Umsatzgrad des mindestens einen Alkyl(meth)acrylats und des mindestens einen weiteren Alkyl(meth)acrylats insgesamt im Bereich von 20 bis 60 % liegt, bezogen auf die im aufgereinigten Mischstrom enthaltene Menge an mindestens einem Alkyl(meth)acrylat und mindestens einem weiteren Alkyl(meth)acrylat.

11. Verfahren gemäß einem der Ansprüche 1 bis 10, **dadurch gekennzeichnet, dass** die Schritte f) und g) zeitgleich durchgeführt werden.

12. Verfahren gemäß einem der Ansprüche 1 bis 11, **dadurch gekennzeichnet, dass** die Entgasung in Schritt g) im Gegenstrom zur Förderrichtung der in Schritt f) erhaltenen Polymermischung erfolgt.

13. Verfahren gemäß einem der Ansprüche 1 bis 12, **dadurch gekennzeichnet, dass** das in der Polymermischung enthaltene Poly(alkyl(meth)acrylat) ein Poly(methyl(meth)acrylat) ist.

14. Verfahren gemäß einem der Ansprüche 1 bis 13, **dadurch gekennzeichnet, dass** die Abtrennung in Schritt h) die folgenden Schritte umfasst:
h1) Trennung des Kondensatstroms in einen zweiten Kopfstrom, der das mindestens eine Alkyl(meth)acrylat, das mindestens eine weitere Alkyl(meth)acrylat und den mindestens einen weiteren Alkylester enthält, und einen zweiten Sumpfstrom, der Oligomere des mindestens einen Alkyl(meth)acrylats und Oligomere des mindestens einen weiteren Alkyl(meth)acrylats enthält,
h2) Destillation des in Schritt h1) erhaltenen zweiten Kopfstroms unter Erhalt eines dritten Kopfstroms, der den mindestens einen weiteren Alkylester enthält, und eines dritten Sumpfstroms, der das mindestens eine Alkyl(meth)acrylat und das mindestens eine weitere Alkyl(meth)acrylat enthält.

15. Verfahren gemäß einem der Ansprüche 1 bis 14, **dadurch gekennzeichnet, dass** der in Schritt h) erhaltene Alkyl(meth)acrylatstrom in zumindest einen der Schritte c), e) und/oder f) zumindest teilweise rückgeführt wird.

16. Verfahren gemäß einem der Ansprüche 2 bis 15, **dadurch gekennzeichnet, dass** der Schritt h) den Schritt d) umfasst.
